# EUROPÄISCHE PATENTANMELDUNG

(11) **EP 4 654 445 A1**
(43) Veröffentlichungstag der Anmeldung: **26.11.2025**
(21) Anmeldenummer: 24177828.1
(22) Anmeldetag: 24.05.2024
(51) Int. Cl.: H02K 7/116, H02K 7/14, H02K 11/00, H02K 11/33, B01F 27/2322

(54) **HANDBETÄTIGBARE BAUMISCHMASCHINE, INSBESONDERE HANDBETÄTIGBARE RÜHRMASCHINE FÜR DAS RÜHREN UND/ODER MISCHEN VON BAUSTOFFEN**

(71) Anmelder: Collomix GmbH, 85080 Gaimersheim (DE)
(72) Erfinder: Essing, Alexander, 85049 Ingolstadt (DE); Baumann, Martin, 85080 Gaimersheim (DE)
(74) Vertreter: Liebl, Thomas

(57) **Zusammenfassung**

Die Erfindung betrifft eine handbetätigbare Baumischmaschine (1), insbesondere handbetätigbare Rührmaschine für das Rühren und/oder Mischen von Baustoffen, mit einem Gehäuse (2), in dessen Gehäuseinnenraum (35) ein Antriebsmotor (5) wenigstens zum Teil aufgenommen ist, wobei der Antriebsmotor (5) wenigstens eine Antriebswelle (7) aufweist, die unmittelbar oder mittelbar mit einem Misch- und/oder Rührwerkzeug wirkverbindbar ist. Zudem ist eine Betätigungseinrichtung (13) vorgesehen, mittels der der Antriebsmotor betätigbar ist, wobei der Antriebsmotor (5), vorzugsweise gesteuert über eine mit der Betätigungseinrichtung (13) gekoppelte Steuereinrichtung, geeignet und ausgebildet ist, eine Drehzahl, vorzugsweise eine Last-Drehzahl, an der das Misch- und/oder Rührwerkzeug antreibenden Antriebswelle (7) von 200 U/min bis 1000 U/min, bevorzugt von 250 U/min bis 750 U/min, höchst bevorzugt von 300 U/min bis 650 U/min, zur Verfügung zu stellen..

## Beschreibung

Die Erfindung betrifft eine handbetätigbare Baumischmaschine, insbesondere eine handbetätigbare Rührmaschine für das Rühren und/oder Mischen von Baustoffen.

Für das professionale Rühren und Mischen von Materialien, insbesondere auf Baustellen, sind handbetätigbare Baumischmaschinen bekannt, die elektrisch angetrieben sind. Gemischt und gerührt werden insbesondere Fertigputz und Fertigmörtel, Spachtelmassen, Farben, Kleber, Tapetenkleister, Estrich, Beschichtungen, Dichtstoffe, und vieles mehr.

Aus der DE 20 2010 014 783 U1 ist eine derartige handbetätigbare Baumischmaschine bekannt, die ein Handgriffelement und ein Gehäuse aufweist, wobei in dem Gehäuse ein Antriebsmotor aufgenommen ist und der Antriebsmotor eine Antriebswelle aufweist, die mit einem Schaft eines Misch- und/oder Rührwerkzeugs wirkverbunden ist. Das Gehäuse ist zweiteilig ausgebildet und weist ein oberes Gehäuseteil auf, das einen Gehäusedeckel ausbildet, der mittels mehrerer Schraubverbindungen direkt mit dem unteren Gehäuseteil verbunden ist. Der Gehäusedeckel stützt sich dabei auf einem Ringelement eines Querbügels des Handgriffelementes ab, wobei der Querbügel bzw. dessen Ringelement mittels mehrerer Schraubverbindungen mit dem unteren Gehäuseteil verbunden ist. Der Querbügel des Handgriffelementes weist zu beiden Seiten des Gehäuses abragende Querstreben auf, die beidseitig mit Handgriffen versehen sind, die wiederum durch Griffschalen ausgebildet sind. Eine durch einen Handschalter gebildete Betätigungseinrichtung ist Bestandteil eines der beiden Handgriffe und über eine Kabelverbindung mit dem Antriebsmotor verbunden. Bei einer Betätigung des Handschalters wird der Antriebsmotor aktiviert und dadurch das Misch- und Rührwerkzeug für die jeweilige Mischaufgabe drehangetrieben. In der Praxis ist die durch den Handschalter gebildete Betätigungseinrichtung so ausgelegt, dass die Maschine umso schneller läuft, je stärker der Handschalter eingedrückt wird. Zusätzlich können derartige Maschinen auch mit einer mechanischen Gangschaltung versehen sein, mit der zwei unterschiedliche Maximaldrehzahlen zur Verfügung gestellt werden, nämlich ein erster langsamer Gang und ein demgegenüber zweiter, schnellerer Gang. Mit einer derartigen Baumischmaschine lassen sich somit bereits sehr gute Mischergebnisse erzielen.

Demgegenüber liegt der vorliegenden Erfindung die Aufgabe zugrunde, eine handbetätigbare Baumischmaschine, insbesondere eine handbetätigbare Rührmaschine zum Rühren und/oder Mischen von Baustoffen, zu schaffen, die einen besonders robusten und wenig beschädigungsanfälligen Aufbau aufweist und/oder die auf individuelle Weise optimal an unterschiedlichste Rühr- und/oder Mischaufgaben angepasst werden kann.

Diese Aufgabe wird gelöst mit den Merkmalen der unabhängigen Ansprüche. Vorteilhafte Ausgestaltungen sind Gegenstand der darauf rückbezogenen Unteransprüche.

Gemäß Anspruch 1 ist eine handbetätigbare Baumischmaschine, insbesondere eine handbetätigbare Rührmaschine für das Rühren und/oder Mischen von Baustoffen, vorgesehen, die ein Gehäuse aufweist, in dessen Gehäuseinnenraum ein Antriebsmotor wenigstens zum Teil, vorzugsweise vollständig, aufgenommen ist, wobei der Antriebsmotor wenigstens eine Antriebswelle aufweist, die unmittelbar oder mittelbar mit einem Misch- und/oder Rührwerkzeug wirkverbindbar ist.

Zudem ist eine Betätigungseinrichtung vorgesehen, mittels der der Antriebsmotor betätigbar, insbesondere aktivierbar und gegebenenfalls deaktivierbar ist. Die Betätigungseinrichtung kann zum Beispiel durch einen federvorgespannten Handschalter gebildet sein. Weiter ist es vorteilhaft, wenn die Betätigungseinrichtung die Funktion eines EIN/AUS-Schalters aufweist. Dies hat den Vorteil, dass die Baumischmaschine nur bei betätigter Betätigungseinrichtung betrieben werden kann und die Rühr- und/oder Mischarbeit einfach durch ein Loslassen der Betätigungseinrichtung beendet werden kann.

Gemäß einer besonders bevorzugten Ausgestaltung ist vorgesehen, dass der Antriebsmotor, vorzugsweise gesteuert über eine mit der Betätigungseinrichtung gekoppelte Steuereinrichtung, geeignet und ausgebildet ist, eine Drehzahl, vorzugsweise eine Last-Drehzahl, an der das Misch- und/oder Rührwerkzeug antreibenden Antriebswelle des Misch- und/oder Rührwerkzeugs von 200 U/min bis 1000 U/min, bevorzugt von 250 U/min bis 750 U/min, höchst bevorzugt von 300 U/min bis 650 U/min, zur Verfügung zu stellen

Hierzu ist bevorzugt vorgesehen, dass diese Drehzahl durch ein Getriebe bzw. eine Getriebeuntersetzung des an der Motorausgangswelle, vorzugsweise der Rotorwelle als Motorausgangswelle, eine Motordrehzahl, vorzugsweise eine Last-Motordrehzahl, von 12000 U/min bis 21000 U/min, bevorzugt von 14000 U/min bis 19000 U/min, höchst bevorzugt von 16000 U/min bis 17000 U/min, zur Verfügung stellenden Antriebsmotors bewirkt ist.

Mit einem derartig ausgelegten Antriebsmotor lässt sich eine breite Palette von Drehzahlen an der Abtriebs- bzw. Antriebswelle bereitstellen, wodurch die Baumischmaschine für eine Vielzahl von Mischanwendungen und Materialen eingesetzt werden kann, so zum Beispiel von langsameren Drehzahlen für schwere, zähe Materialien bis hin zu höheren Drehzahlen für leichtere, flüssigere Materialien. Insbesondere kann dadurch, wie dies zum Beispiel beim Mischen von schweren Materialien der Fall ist, ein hohes Drehmoment bei niedriger Drehzahl bereitgestellt werden. Zudem wird durch die Überdimensionierung des Motors eine hohe Luftleistung des Lüfters und ein hohes Drehmoment erzielt, was ausreichende Leistung und Kühlung im reduzierten Drehzahlbereich gewährleistet. Die Drehzahl kann mittels des optional vorhandenen Elektronikmoduls (in zum Beispiel 50er Schritten) ausgewählt werden, wodurch eine mechanische Gangverstellung mit zusätzlichen Bauteilen überflüssig wird. Dies vereinfacht auch die Herstellung des Getriebegehäuses, da kein in der Gehäusewand sitzender, quer laufender Getriebe-Schaltknopf geführt und abgedichtet werden muss.

Das heißt, dass eine derartige Motor-/Getriebekombination eine Reihe von Vorteilen bietet, die den Bedürfnissen und Anforderungen der Anwender in vielerlei Hinsicht gerecht werden und nachstehend nochmals zusammengefasst werden:
So liegt ein erster wesentlicher Vorteil der Baumischmaschine in der fehlenden Notwendigkeit einer manuellen Gang-Umschaltung. Denn aufgrund der vorgesehenen Möglichkeit einer elektronischen Gangwahl über das Elektronikmodul kann auf einen externen Handschalter an der Baumischmaschine verzichtet werden. Daraus resultiert auch ein weiterer entscheidender Vorteil, nämlich die damit einhergehenden Kosteneinsparungen. Die Reduzierung der Bauteile und die Vereinfachung der Montageprozesse führen zu einer signifikanten Senkung der Herstellungskosten. Und schließlich trägt der langsam drehende Motor zu einer erheblichen Geräuschreduzierung bei, was die Arbeitsumgebung deutlich angenehmer macht. Dementsprechend ist gemäß einer besonders bevorzugten Ausführungsform auch vorgesehen, dass das Getriebe der Baumischmaschine kein extern und/oder manuell von einem Bediener schaltbares Getriebe ist.

Gemäß einer besonders bevorzugten Ausführungsform ist vorgesehen, dass das Getriebe eine Getriebeuntersetzung im Bereich von 35:1 bis 15:1, vorzugsweise von 30:1 bis 20:1, aufweist.

Grundsätzlich könnte der Antriebsmotor als pneumatischer oder hydraulischer Antriebsmotor ausgebildet sein. Gemäß einer besonders bevorzugten Ausführungsform ist jedoch vorgesehen, dass der Antriebsmotor durch einen Elektromotor gebildet ist, der einen Rotor und einen Stator aufweist. Elektromotoren ermöglichen eine präzisere Geschwindigkeits- und Drehmomentregelung im Vergleich zu hydraulischen oder pneumatischen Antrieben. Zudem sind Elektromotoren weniger verschleißanfällig als hydraulische oder pneumatische Systeme, insbesondere auch hinsichtlich eventueller Leckagen. Elektromotoren sind zudem oft leiser im Betrieb als hydraulische oder pneumatische Antriebe, was die Arbeitsumgebung angenehmer macht und das Risiko von Lärmbelästigung verringert.

Das Gehäuse ist bevorzugt ein- oder mehrteilig, vorzugsweise mehrteilig ausgebildet, und weist ein oberes Gehäuseteil auf, das einen Gehäusedeckel ausbildet und, vorzugsweise lösbar, mit einem ein- oder mehrteiligen unteren Gehäuseteil verbunden ist. Sämtliche Richtungsangaben, wie zum Beispiel die Begrifflichkeiten "oben", "obere", "unten", "untere" etc. beziehen sich, sofern dies nicht explizit anders angegeben ist, sowohl in der Beschreibung als auch in den Ansprüchen immer auf die Hochachsenrichtung der Baumischmaschine, die der Gebrauchsposition der Baumischmaschine entspricht.

Ferner weist die Baumischmaschine bevorzugt eine Handgriffeinrichtung auf, die wenigstens einen Handgriff aufweist oder ausbildet und die mit dem Gehäuse verbunden ist. Unter einem Handgriff wird dabei grundsätzlich jede Ausgestaltung verstanden, die von einem Bediener im Betrieb der Baumischmaschine mit der Hand ergriffen werden kann, um die Baumischmaschine während eines Misch- und/oder Rührvorgangs in der gewünschten Position zu halten.

Die Betätigungseinrichtung ist bevorzugt mit der Steuereinrichtung gekoppelt, mittels der bei einer Betätigung der Betätigungseinrichtung der Antriebsmotor elektronisch ansteuerbar ist. Eine derartige Steuereinrichtung ermöglicht es auf besonders einfache Weise, die Drehzahl und/oder die Geschwindigkeit des Antriebsmotors exakt an die jeweiligen Misch- und/oder Rühraufgaben anzupassen und damit zu steuern. Dadurch können auch die Geschwindigkeit bzw. die Drehzahl des Rühr- und/oder Mischwerkzeugs exakt an die Anforderungen des jeweils zu rührenden bzw. zu mischenden Mischgutes angepasst werden, was wiederum zu einer verbesserten Mischqualität, weniger Staub durch aufgewirbeltes Trockenmaterial, weniger Auswurf aus dem Eimer und einen geringeren Geräuschpegel führt. Ein weiterer besondere Vorteil einer Steuereinrichtung ist zudem, dass diese auch weitere Funktionen, wie beispielsweise Sicherheitsfunktionen, umfassen kann, mittels denen der Betrieb des Antriebsmotors überwacht werden kann. Mit der Steuereinrichtung wird somit insgesamt eine präzisere und flexiblere Nutzung bei gleichzeitig effizientem Betrieb der Baumischmaschine möglich.

Die Steuereinrichtung ist hier ganz grundsätzlich bevorzugt durch eine Steuereinheit als elektronische Einheit gebildet, die die gesamte Steuerlogik (inklusive etwaiger Algorithmen) enthält und die Verarbeitung von Befehlen durchführt. Es kann sich hierbei beispielsweise um einen Mikrocontroller oder um einen programmierbaren Logikcontroller (PLC) handeln, um nur einige Beispiele zu nennen. Die Steuereinrichtung kann beispielsweise mit Sensoren und Bedienoberflächen (Touchscreens, physische Schalter etc.) gekoppelt sein, um Signale und Befehle zu empfangen, auf Basis derer dann die Steuereinrichtung auf Basis ihrer Steuerlogik den Betrieb der Baumischmaschine durch Ausgabe von Steuersignalen an den Antriebsmotor steuert oder durch eine per Phasenanschnitt getaktete Spannung den Antriebsmotor steuert.

Dies kann bei einer vereinfachten Ausführungsform zum Beispiel dadurch erreicht werden, dass die Betätigungseinrichtung, beispielsweise eine Handschalter als Betätigungseinrichtung, eine einfache Steuereinrichtung bzw. Steuerelektronik aufweist und/oder in sich trägt oder die Steuereinrichtung zum Beispiel unmittelbar benachbart zu der Betätigungseinrichtung angeordnet wird, zum Beispiel beide Bauelemente am bzw. in einem Handgriff angeordnet werden. Hierbei kann dann die Steuereinrichtung dergestalt mit der Betätigungseinrichtung gekoppelt sein, dass die Drehzahl der Baumischmaschine in Abhängigkeit von dem Betätigungsweg der Betätigungseinrichtung eingestellt wird, zum Beispiel beim Drücken durch den Bediener eingestellt wird. Das heißt beispielsweise, je stärker die zum Beispiel durch einen Handschalter gebildete Betätigungseinrichtung gedrückt bzw. eingedrückt wird, desto schneller läuft der Antriebsmotor bzw. die Baumischmaschine.

Gemäß einer besonders bevorzugten Ausgestaltung ist vorgesehen, dass die Steuereinrichtung Bestandteil eines Elektronikmoduls ist, das im Gehäuseinnenraum, vorzugweise im Bereich des Gehäusedeckels, und/oder, mit Bezug auf die Gebrauchsposition der Baumischmaschine, oberhalb des Antriebsmotors angeordnet sowie mit dem Antriebsmotor elektrisch verbunden ist. Eine derartige optionale Integration einer Steuereinrichtung in ein Elektronikmodul bietet die Möglichkeit die Steuereinrichtung auf engstem Bauraum mit gegebenenfalls weiteren elektronischen Funktionseinheiten zu verknüpfen. Insbesondere die Anordnung eines Elektronikmoduls im Gehäuseinnenraum, vorzugsweise im Bereich des Gehäusedeckels, und/oder oberhalb des Antriebmotors ermöglicht eine kompakte Bauweise mit kurzen Anschlusswegen von elektrischen Leitungen bzw. Kabeln zu den mit Energie zu versorgenden Bauteilen. Zudem erlauben derartige Elektronikmodule auf besonders einfache Weise auch die Programmierung der Steuereinrichtung oder gegebenenfalls auch die Konfigurierung der Steuereinrichtung im Hinblick auf die Einstellung unterschiedlicher Betriebsmodi. Beispielweise können in ein Elektronikmodul auch Sensoren integriert werden, um verschiedene Parameter zu überwachen, gegebenenfalls auch Fehler zu erkennen und Diagnosen durchzuführen. Zudem können derartige Elektronikmodule auf einfache Weise mit Benutzerschnittstellen, wie beispielsweise Displays, Tasten oder Touchscreens zusammenwirken, die die Interaktion mit der Baumischmaschine vereinfachen und eine intuitivere bzw. individuellere Bedienung ermöglichen. So kann das Gehäuse und hier besonders bevorzugt das Elektronikmodul gemäß einer besonders bevorzugten Ausgestaltung eine Anzeige- und/oder Bedieneinrichtung aufweisen, mittels der ein Betriebszustand des Antriebsmotors anzeigbar und/oder ein Betriebsmodus des Antriebsmotors eingebbar ist. Alternativ dazu kann die Anzeige- und/oder Bedieneinrichtung aber auch direkt in den Gehäusedeckel integriert werden. Bei dieser Ausführungsvariante ergibt sich dann eine vorteilhafte Funktionsintegration, da der Gehäusedeckel in einer Doppelfunktion gleichzeitig auch zur Lagerung und Anordnung der Anzeige- und/oder Bedieneinrichtung dient. Zudem ergibt sich damit eine besonders kompakte Bauweise. Auch Mischvarianten sind selbstverständlich möglich, das heißt, dass ein Teil der Komponenten der Anzeige- und/oder Bedieneinrichtung am Gehäusedeckel und ein Teil der Komponenten der Anzeige- und/oder Bedieneinrichtung am Elektronikmodul angeordnet sein kann. Die Anzeige- und/oder Bedieneinrichtung ist in sämtlichen Ausführungsvarianten besonders bevorzugt über einen Zugangsbereich des Gehäusedeckels bedienbar und/oder zugänglich, der im unmittelbaren Sichtbereich eines Benutzers liegt.

Der Zugangsbereich kann auf unterschiedliche Art und Weise ausgebildet sein, so zum Beispiel durch eine Bedienfolie oder eine Ausnehmung im Gehäusedeckel, vorzugsweise in einer Oberseite des Gehäusedeckels, gebildet sein, über die die Anzeige- und/oder Bedieneinrichtung bedienbar und/oder zugänglich ist. Bedienfolien ermöglichen einen zuverlässigen Schutz gegenüber äußeren Einflüssen wie Staub, Feuchtigkeit und Verschmutzungen, erfordern jedoch auch einen erhöhten Herstellaufwand, sodass gemäß einer besonders bevorzugten Ausgestaltung vorgesehen ist, dass der Zugangsbereich durch eine Ausnehmung im Gehäusedeckel vorzugsweise in einer Oberseite des Gehäusedeckels, gebildet ist. In Verbindung mit einer derartigen bevorzugten Ausgestaltung ist die Anzeige- und/oder Bedieneinrichtung bevorzugt auf einer Sichtseite des Elektronikmoduls angeordnet, die die Ausnehmung im montierten Zustand verschließt, insbesondere dicht verschließt, und Bestandteil der Oberseite des Gehäusedeckels bildet. Auch mit einer derartigen Ausgestaltung wird ein zuverlässiger Schutz des Gehäuseinnenraums gegenüber äußeren Einflüssen wie Staub, Feuchtigkeit und Verschmutzungen erzielt. Dies wird insbesondere dann erreicht, wenn die Sichtseite des Elektronikmoduls die Ausnehmung im montierten Zustand dicht verschließt. Auch hier kann selbstverständlich auf der Sichtseite des Elektronikmoduls und damit im Bereich der Anzeige- und/oder Bedieneinrichtung eine Bedienfolie vorgesehen sein.

Die Anzeige- und/oder Bedieneinrichtung weist wenigstens ein Interaktionselement, vorzugsweise wenigstens eine physische Eingabetaste und/oder wenigstens eine virtuelle Eingabefläche (zum Beispiel Touchscreen), auf. Mit einem derartigen Interaktionselement ist wenigstens ein Mischparameter, vorzugsweise die Mischzeit und/oder die Drehzahl, einstellbar bzw. vorgebbar. Diese Lösung bietet den Vorteil, dass der Benutzer die Mischparameter bequem von der Baumischmaschine selbst aus steuern und überwachen kann, was die Flexibilität und Benutzerfreundlichkeit der Baumischmaschine erhöht. Alternativ oder zusätzlich dazu kann die Anzeige- und/oder Bedieneinrichtung mit wenigstens einem externen Interaktionselement signalübertragend, vorzugsweise in Verbindung mit einer App, koppelbar sein, wobei mittels des wenigstens einen externen Interaktionselementes, beispielsweise ein mobiles Endgerät, wenigstens ein Mischparameter, vorzugsweise die Mischzeit und/oder die Drehzahl, einstellbar bzw. vorgebbar ist. Hierzu kann die Anzeige- und/oder Bedieneinrichtung bzw. die mit der Anzeige- und/oder Bedieneinrichtung gekoppelte Steuereinrichtung der Baumischmaschine mit einem Kommunikationsmodul ausgestattet sein, das die drahtlose Kommunikation mit einer entsprechenden App des mobilen Endgerätes ermöglicht. Dies könnte über Bluetooth, WLAN oder eine andere drahtlose Technologie erfolgen. Ein Benutzer kann hier dann eine entsprechende App auf sein mobiles Gerät herunterladen und es mit der Baumischmaschine koppeln. Über die App kann der Benutzer dann die gewünschten Mischparameter, beispielsweise die Mischzeit und Drehzahl einstellen. Oder der Benutzer scannt einen Code auf einem Gebinde, in dem das Mischgut aufgenommen ist, zum Beispiel einen Code auf einem Zementsack, so dass dann der Code die Mischparameter vorgibt. Die Anzeige- und/oder Bedieneinrichtung kann die eingestellten, zum Beispiel gescannten, Mischparameter auch anzeigen, damit der Benutzer überprüfen kann, ob die Einstellungen korrekt übernommen wurden. Während des Mischvorgangs kann die App zudem gegebenenfalls Daten von der Baumischmaschine empfangen, beispielsweise über die aktuellen Betriebszustände oder Mischparameter.

Alternativ oder zusätzlich ist gemäß einer weiteren besonders bevorzugten Ausgestaltung vorgesehen, dass die Anzeige- und/oder Bedieneinrichtung wenigstens ein Display aufweist, auf dem wenigstens eine den Mischvorgang charakterisierende Information, vorzugsweise die Mischzeit und/oder die Drehzahl, anzeigbar ist. Bei einer alleinigen Anzeige der Mischzeit mit automatischer Rücksetzung kann beispielsweise auch auf eine physische Eingabetaste verzichtet werden. Die Begrifflichkeit "charakterisierende Information" umfasst hierbei alles, was auf einem Display dargestellt werden kann, unabhängig davon ob es sich um numerische Werte, Diagramme, Grafiken, Bilder oder andere visuelle Informationen handelt.

Mit der Anzeige- und/oder Bedieneinrichtung lässt sich insbesondere die Mischzeit gut darstellen und kontrollieren. So kann gemäß einer besonders bevorzugten Ausgestaltung vorgesehen sein, dass die Steuereinrichtung eine Zeitzählerfunktion, vorzugsweise mit einer Pausenfunktion, umfasst, mittels der die Mischzeit bei einer Betätigung der Betätigungseinrichtung auf dem Display anzeigbar ist, wobei bevorzugt vorgesehen ist, dass der Zeitzähler bei einer Betätigung der Baumischmaschine mittels der Betätigungseinrichtung für eine vorgegebene Zeit startet und/oder dass der Zeitzähler eine Pausenfunktion aufweist, mittels der in Abhängigkeit von einer vorgegebenen Pausenzeit der Zeitzähler entweder auf Null gesetzt wird, wenn die Pausenzeit überschritten wird, oder der Zeitzähler weiterläuft, wenn die Pausenzeit nicht überschritten wird. Diese Zeitzählerfunktion ermöglicht es, die Mischzeit zu erfassen, während der die Baumischmaschine in Betrieb ist, und gegebenenfalls Pausenzeiten zu berücksichtigen. Beispielsweise kann bei einer Betätigung der Baumischmaschine der Zeitzähler automatisch starten. Der Zeitzähler läuft entweder kontinuierlich weiter und zählt die gesamte Betriebszeit der Baumischmaschine oder stoppt nach Ablauf einer vordefinierten Zeit. Die optionale Pausenfunktion ermöglicht es, den Mischbetrieb zu unterbrechen. Abhängig von einer vorher festgelegten Pausenzeit kann der Zeitzähler entweder auf Null gesetzt werden, wenn die Pausenzeit überschritten wird, oder er kann weiterlaufen, wenn die Pausenzeit nicht überschritten wird. Die Zeiteinstellungen, einschließlich der Betriebszeit und der Pausenzeit, können entweder herstellerseitig fest vorgegeben sein oder gegebenenfalls auch von Benutzern oder Bedienern je nach den Anforderungen der Anwendung angepasst werden. In diesem Fall ermöglicht es dann die Steuereinrichtung, die Zeitintervalle für den Betrieb und die Pausen individuell festzulegen, um den verschiedenen Arbeitsanforderungen gerecht zu werden. Die Zeitzählerfunktion der Baumischmaschine bietet somit eine effiziente Möglichkeit, die Betriebsdauer und die Mischzeiten zu überwachen, Pausen zu verwalten und den Betrieb an die spezifischen Anforderungen anzupassen.

Gemäß einer weiteren besonders bevorzugten Ausgestaltung ist vorgesehen, dass die Betätigungseinrichtung, vorzugsweise ein Handschalter, höchst bevorzugt ein in die AUS-Position vorgespannter Handschalter, Bestandteil der Handgriffeinrichtung ist, die kabellos oder kabelgebunden mit der Steuereinrichtung, bevorzugt mit dem Elektronikmodul und damit mit der Steuereinrichtung, koppelbar ist oder gekoppelt ist. Die Betätigungseinrichtung, die bevorzugt gleichzeitig als EIN-Schalter, höchst bevorzugt als EIN/AUS-Schalter fungiert, kann bei einer Anordnung im Bereich der Handgriffeinrichtung, insbesondere wie dies nachstehend noch näher erläutert wird, im Bereich eines Handgriffs der Handgriffeinrichtung, bequem vom Bediener mit der Hand betätigt werden, insbesondere in Verbindung mit einer bevorzugten Zweihandbedienung der Baumischmaschine.

Gemäß einer weiteren besonders bevorzugten Ausgestaltung kann zudem vorgesehen sein, dass die Betätigungseinrichtung mit einem Einschaltverriegelungselement gekoppelt ist, das die Betätigungseinrichtung lösbar verriegelt und das für eine Freigabe der Betätigung der Betätigungseinrichtung zusätzlich zu dieser aktivierbar, insbesondere drückbar ist. Ein derartiger Einschaltverriegelungselement stellt damit eine zusätzliche Sicherheitsfunktion da, mit der unerwünschte Betätigungen der Baumischmaschine vermieden werden.

Das Handgriffelement weist bevorzugt weiter einen ein- oder mehrteilig ausgebildeten und/oder quer zur Längserstreckungsrichtung des Gehäuses ausgerichteten und als

Griffbügel fungierenden Querbügel mit einem Ringelement auf. Das Ringelement umgibt den Gehäuseinnenraum wenigstens bereichsweise oder abschnittsweise ringförmig und/oder ist an einem die Gehäuseöffnung des unteren Gehäuseteils ausbildenden Öffnungsrandbereich des unteren Gehäuseteils abgestützt und/oder befestigt, vorzugsweise mittels wenigstens eines Befestigungselementes lösbar befestigt. Besonders bevorzugt ist vorgesehen, dass der Querbügel zudem den wenigstens einen Handgriff aufweist oder ausbildet. Mit einem derartigen Handgriffelement, das einen Querbügel bzw. Griffbügel mit einem Ringelement aufweist, lässt sich eine definierte und funktionssichere Abstützung des Handgriffelementes an dem Gehäuse erzielen, was sich insbesondere vorteilhaft für eine definierte Krafteinleitung in das Gehäuse auswirkt. Die in Verbindung mit dem Ringelement verwendeten Begrifflichkeiten "ringförmig" und "abschnittsweise" sind ausdrücklich in einem sehr weiten Sinne zu verstehen und umfassen alle diejenigen Ausgestaltungen und/oder Ausführungsformen, bei denen eine irgendwie geartete umfangsseitige Abstützung des Handgriffelementes an einem oder mehreren definierten Bereichen des Öffnungsrandbereichs des unteren Gehäuseteils erfolgt, sei es, dass das Ringelement ringförmig geschlossen oder mit Bezug auf die Umfangsrichtung Unterbrechungen zur Ausbildung segmentartiger Abschnitte aufweist. Auch von einer Kreisringform abweichende Formgebungen, zum Beispiel eckig, oval oder dergleichen, sind jederzeit möglich und von dem Begriff "ringförmig" bzw. "Ringelement" umfasst.

An dieser Stelle sei zudem erwähnt, dass der Antriebsmotor bei einem mehrteilig ausgebildeten Gehäuse mit einem Gehäusedeckel vorzugsweise im Wesentlichen vollständig im unteren Gehäuseteil aufgenommen ist.

Gemäß einer bevorzugten konkreten Ausgestaltung ist vorgesehen, dass der Querbügel, insbesondere für eine besonders bevorzugte Zweihandbedienung der Baumischmaschine, zwei Handgriffe ausbildet oder aufweist, die auf in Querrichtung gegenüberliegenden Querbügelseiten des in einem mittleren Bereich zwischen den beiden Handgriffen, vorzugsweise mittig oder zentral zwischen den beiden Handgriffen, liegenden Ringelementes angeordnet sind. Eine derartige Zweihandbedienung ist die bevorzugte Bedienung der erfindungsgemäßen Baumischmaschine, da sich damit der Rühr- und/oder Mischvorgang besonders einfach kontrollieren und beherrschen lässt.

Für einen bequemen Griff ist es besonders bevorzugt, dass jeder Handgriff mit dem Ringelement über wenigstens eine, vorzugsweise strahlartig, von dem Ringelement abragende Querstrebe verbunden ist, vorzugsweise jeder Handgriff mit dem Ringelement über mehrere, insbesondere zwei, auf jeder Querbügelseite von dem Ringelement abragende und voneinander beabstandete Querstreben verbunden ist. Letzteres bevorzugt in Verbindung mit einer Ausführungsform, bei der vorgesehen ist, dass die Querstreben und die Handgriffe in etwa U-förmig ausgebildet sind und die Handgriffe Bestandteil der U-Basis sind oder diese ausbilden. Die Anbindung der Handgriffe über mehrere Querstreben ermöglicht eine besonders stabile Ausgestaltung des Querbügels und zudem auch eine vorteilhafte Aufteilung des Kraftflusses, damit die im Rühr- und/oder Mischbetrieb auftretenden Belastungen gleichmäßiger verteilt werden können.

Insbesondere für eine bequeme Handbedienung ist gemäß einer besonders bevorzugten konkreten Ausgestaltung vorgesehen, dass die Betätigungseinrichtung, vorzugsweise ein die Betätigungseinrichtung ausbildender Handschalter, Bestandteil des wenigstens eines Haltegriffs oder Bestandteil wenigstens eines der Haltegriffe ist. Gemäß einer weiteren besonders bevorzugten, konkreten Ausgestaltung ist vorgesehen, dass eine Kabelverbindung, die durch wenigstens eine elektrische Leitung oder durch einen Verbund aus mehreren elektrischen Leitungen gebildet ist, von der Betätigungseinrichtung ausgehend über wenigstens eine der Querstreben des Querbügels, vorzugsweise nach außen hin mittels einer querstrebenseitig anordenbaren Schutzschale abgekapselt, zum Gehäuse und in den Gehäuseinnenraum zu einem Anschlusselement geführt ist. Das Anschlusselement kann je nach Ausführungsform der Baumischmaschine durch unterschiedliche Bauteile gebildet sein, besonders bevorzugt durch einen im Innenraum des Gehäuses angeordneten Steckverbinder, der mehrere, beispielsweise einen Kabelverbund oder einen Kabelbaum ausbildende elektrische Leitungen, in einem Steckelement vereint und diese zum Anschluss an einen Steckanschluss bzw. Anschlussstecker, insbesondere zum Anschluss an einen Steckanschluss bzw. Anschlussstecker eines Elektronikmoduls, bereitstellt. Alternativ kann das Anschlusselement aber auch durch die Steuereinrichtung bzw. das Elektronikmodul selbst oder weiter alternativ auch, insbesondere bei einer vereinfachten Ausführungsform ohne Elektronikmodul im Gehäuseinnenraum, durch den Antriebsmotor gebildet sein, wobei in diesem Fall der Schalter eine einfache Steuereinrichtung bzw. Steuerelektronik in sich trägt. Eine derartige Kabelverbindung ist zudem einfach herstellbar und nutzt die ohnehin vorhandene Querstrebe des Querbügels in einer vorteilhaften Doppelfunktion gleichzeitig zur Verlegung der wenigstens einen elektrischen Leitung der Kabelverbindung. Die gekapselte Kabel- bzw. Leitungsführung dient gleichzeitig auch der Ausbildung einer zweiten elektrischen Isolationsebene, wodurch eine sogenannte "Schutzisiolation" erreicht wird. Dadurch wird nicht nur der Bauteilaufwand reduziert, sondern insgesamt auch eine kompakte Bauweise möglich, die sich zudem auch noch gut in das Design der Baumischmaschine integrieren lässt.

Weiter kann alternativ oder zusätzlich vorgesehen sein, dass die Betätigungseinrichtung, vorzugsweise ein Handschalter, auf einer, bezogen auf die Gebrauchsposition der Baumischmaschine, Unterseite des Handgriffs angeordnet ist, was eine besonders vorteilhafte Betätigung der Betätigungseinrichtung mittels des Zeigefingers und/oder Mittelfingers einer Hand erlaubt.

Besonders bevorzugt ist zudem eine Ausgestaltung, bei der die Handgriffe ergonomisch geformt sind, zum Beispiel dergestalt, dass die Handgriffe im Falle zweier Handgriffe und bezogen auf die vom Benutzer aus gesehene Griffposition, in der Art eines umgedrehten "V" von außen nach innen winklig angestellt sind, um die Hände des Benutzers in eine optimale Griffposition für eine Zweihandbedienung zu zwingen. Alternativ oder zusätzlich können die Handgriffe auf ihrer dem Gehäuse zugewandten Innenseite in einem mittleren Bereich auch einen kuppelartigen Vorsprung aufweisen, der, bezogen auf die Draufsicht, zu seinen beiden Seiten mit einem gewölbten Kuppelbereich bogenförmig in den zugeordneten Innenseitenbereich des Handgriffs übergeht. Der dem Benutzer abgewandte Kuppelbereich der Innenseite dient dabei der bequemen Daumenablage und ist damit ein bevorzugter Ort, an dem die zum Beispiel durch einen Handschalter gebildete Betätigungseinrichtung für eine bequeme Daumenbedienung angeordnet ist. Der dem Benutzer zugewandte Kuppelbereich ist dagegen beim Greifen der Handgriffe dem Zeigefinger zugewandt und bildet damit ebenfalls einen Bereich aus, der dem Bediener automatisch die richtige Griffposition vorgibt.

Weiter ist bevorzugt vorgesehen, dass der Handgriff einen Hohl- und/oder Aufnahmeraum aufweist, in dem ein Teilbereich der von außen betätigbaren und zugänglichen Betätigungseinrichtung, insbesondere ein Teilbereich eines von außen betätigbaren und zugänglichen Handschalters, gelagert und/oder aufgenommen ist und/oder in dem ein Teil der Kabelverbindung verläuft und/oder aufgenommen ist. Damit gelingt zum einen eine besonders vorteilhafte Lagerung und Anordnung einer Betätigungseinrichtung, insbesondere in Form eines Handschalters, und zudem auch eine Abschirmung der mit der Betätigungseinrichtung verbundenen Kabelverbindung gegenüber der Umgebung.

Weiter kann an dem wenigstens einen Handgriff, vorzugsweise an dem Handgriff mit der Betätigungseinrichtung, ein Netzkabel für eine Energieversorgung der Baumischmaschine münden, vorzugsweise in einen Hohl- und/oder Aufnahmeraum des Handgriffs münden, wobei eine Kabelverbindung mit wenigstens einer elektrischen Leitung von dem Netzkabel ausgehend über den Handgriff und über wenigstens eine der Querstreben des Querbügels, vorzugsweise abgekapselt mittels einer querstrebenseitig anordenbaren Schutzschale, vorzugsweise derselben Schutzschale wie die Kabelverbindung der Betätigungseinrichtung, zum Gehäuse und in den Gehäuseinnenraum zu einem Anschlusselement geführt ist. Das Anschlusselement kann je nach Ausführungsform der Baumischmaschine durch unterschiedliche Bauteile gebildet sein, besonders bevorzugt durch einen im Innenraum des Gehäuses angeordneten Steckverbinder, der mehrere, beispielsweise einen Kabelverbund oder einen Kabelbaum ausbildende, elektrische Leitungen in einem Steckelement vereint und diese zum Anschluss an einen Steckanschluss bzw. Anschlussstecker, insbesondere zum Anschluss an einen Steckanschluss bzw. Anschlussstecker eines Elektronikmoduls, bereitstellt. Alternativ kann das Anschlusselement aber auch durch die Steuereinrichtung bzw. das Elektronikmodul selbst oder weiter alternativ auch, insbesondere bei einer vereinfachten Ausführungsform ohne Elektronikmodul im Gehäuseinnenraum, durch den Antriebsmotor gebildet sein.

Bevorzug ist hierbei zudem vorgesehen, dass das Netzkabel an einer, einer Bedienperson zugewandten Handgriffseite aus dem Handgriff herausgeführt ist, wodurch zuverlässig vermieden werden kann, dass sich das Netzkabel eventuell um das Misch- und/oder Rührwerkzeug wickelt.

Gemäß einer weiteren besonders bevorzugten Ausgestaltung ist vorgesehen, dass ein Handgriff, vorzugsweise der die Betätigungseinrichtung nicht aufweisende Handgriff, wenigstens ein Interaktionselement, vorzugsweise wenigstens eine physische Eingabetaste aufweist, mittels dem wenigstens ein Mischparameter, vorzugsweise die Drehzahl der Antriebswelle, einstellbar und/oder vorgebbar ist. Damit kann, gegebenenfalls auch unabhängig von einer Drehzahleinstellungsmöglichkeit über eine Anzeige- und/oder Bedieneinrichtung eines Elektronikmoduls, ein gewünschter Mischparameter, insbesondere die Drehzahl, vom Bediener auch während des Betriebs der Baumischmaschine bequem mit der Hand eingestellt, verändert und/oder angepasst werden, ohne die Notwendigkeit, dies über eine im Bereich des Gehäusedeckels angeordnete Anzeige- und/oder Bedieneinrichtung machen zu müssen, so dass die Hände an der Maschine verbleiben können.

In Verbindung mit dieser Ausführungsform ist es besonders bevorzugt, wenn eine Kabelverbindung mit wenigstens einer elektrischen Leitung von dem wenigstens einen Interaktionselement ausgehend über den Handgriff und über wenigstens eine der Querstreben des Querbügels, vorzugsweise nach außen hin abgekapselt mittels einer querstrebenseitig anordenbaren Schutzschale, zum Gehäuse und in den Gehäuseinnenraum zu einem Anschlusselement geführt ist. Das Anschlusselement kann je nach Ausführungsform der Baumischmaschine durch unterschiedliche Bauteile gebildet sein, besonders bevorzugt durch einen im Innenraum des Gehäuses angeordneten Steckverbinder, der mehrere, beispielsweise einen Kabelverbund oder einen Kabelbaum ausbildende, elektrische Leitungen in einem Steckelement vereint und diese zum Anschluss an einen Steckanschluss bzw. Anschlussstecker, insbesondere zum Anschluss an einen Steckanschluss bzw. Anschlussstecker eines Elektronikmoduls, bereitstellt. Alternativ kann das Anschlusselement aber auch durch die Steuereinrichtung bzw. das Elektronikmodul selbst oder weiter alternativ auch, insbesondere bei einer vereinfachten Ausführungsform ohne Elektronikmodul im Gehäuseinnenraum, durch den Antriebsmotor gebildet sein. In diesem Fall wäre dann die Betätigungseinrichtung mit einer Phasenanschnittsteuerung zu versehen.

Das wenigstens eine Interaktionselement ist vorzugsweise auf einer, bezogen auf die Gebrauchsposition der Baumischmaschine, Oberseite des Handgriffs angeordnet, und zwar insbesondere dergestalt, dass eine Betätigung durch den Bediener bequem mittels eines Daumens durchführbar ist.

Gemäß einer besonders bevorzugten konkreten Ausgestaltung sind insbesondere zwei Interaktionselemente vorgesehen, wobei ein erstes Interaktionselement der Drehzahlerhöhung und ein zweites Interaktionselement der Drehzahlreduzierung dient.

Sowohl der Querbügel als auch die Handgriffe können grundsätzlich aus jedem geeigneten Material hergestellt werden. Besonders bevorzugt ist der Querbügel, insbesondere für einen insgesamt stabilen Aufbau und ein hochwertiges optisches Erscheinungsbild, aus einem Metall, insbesondere aus einem Stahlmaterial, hergestellt. Die Handgriffe selbst sind bevorzugt aus einem Kunststoffmaterial hergestellt. Insbesondere, aber nicht ausschließlich deswegen, ist es in Verbindung mit den nachstehend noch näher erläuterten Handgriffen, die durch Griffschalen gebildet sind, vorteilhaft, wenn der Querbügel, das heißt das Ringelement und die Querstreben des Querbügels, flach und leistenartig ausgebildet sind, insbesondere durch einen Flachstahl oder ein Flachmetall ausgebildet sind, wobei selbstverständlich auch andere Querschnittsformen, beispielsweise runde oder eckige Querschnittsformen möglich sind. Ein derartiger Griffbügel kann beispielsweise aus einer Metall- oder Stahlplatte ausgeschnitten werden. Diese flache Formgebung des Querbügels ist aber auch dann vorteilhaft, wenn dieser gegebenenfalls aus einem anderen Material hergestellt ist, zum Beispiel aus einem Kunststoffmaterial. In allgemeiner Weise weist somit der Querbügel einen flachen bzw. plattenförmigen Querschnitt auf.

Wie bereits zuvor angedeutet, ist es für eine flexible Handgriffausbildung und -anordnung vorteilhaft, dass der wenigstens eine Handgriff durch Griffschalen gebildet ist, die miteinander und/oder mit den Querstreben verbunden sind, vorzugsweise dergestalt, dass auf jeder Querbügelseite zwei voneinander beabstandete Querstrebenenden zweier beabstandeter Querstreben zur Festlegung und/oder Abstützung der Griffschalen dienen, die die zugeordneten Querstrebenbereiche zwischen sich aufnehmen, vorzugsweise zwischen sich verklemmen.

Hierzu kann gemäß einer einfach herstellbaren und zudem funktionssicheren Befestigung der Griffschalen sowie des Handgriffs vorgesehen sein, dass jedes der einem Handgriff zugeordneten Querstrebenenden zweier Querstreben wenigstens ein Positionsloch aufweist, vorzugsweise mehrere, insbesondere zwei, voneinander in Querstreben-Längserstreckungsrichtung beabstandete Positionslöcher aufweist. Weiter sind in diesem Zusammenhang an einer ersten Griffschale des Handgriffs zwei voneinander in Handgrifflängsrichtung beabstandete griffschalenseitige Dome, vorzugsweise Schraubdome mit einem Innengewinde, angeordnet, die zapfenartig ausgebildet sind und im montierten Zustand des Handgriffs einerseits jeweils einem Positionsloch in den beiden Querstrebenenden zugeordnet sind, vorzugsweise in ein zugeordnetes Positionsloch der beiden Querstrebenenden eingreifen, und die andererseits jeweils einer griffschalenseitigen Domöffnung, vorzugsweise einer Durchschrauböffnung, einer zweiten Griffschale des Handgriffs zugeordnet sind. Weiter ist bevorzugt vorgesehen, dass die beiden Griffschalen im montierten Zustand an den Querstrebenenden auf- und/oder anliegen, vorzugsweise diese zwischen sich aufnehmen und/oder zwischen sich verklemmen, und mittels wenigstens einer Befestigungseinrichtung, vorzugsweise wenigstens einer Schraubverbindung, miteinander verbunden sind. Die wenigstens eine Befestigungseinrichtung, beispielsweise wenigstens eine Schraubverbindung, kann beabstandet zu den Domen bzw. den Domöffnungen vorgesehen sein, ist jedoch für eine besonders vorteilhafte Funktionsintegration durch eine Schraubverbindung mit einer Befestigungsschraube gebildet, die durch die Durchschrauböffnung und das zugeordnete Positionsloch hindurch in einen zugeordneten Schraubdom eingeschraubt ist. An dieser Stelle sei ausdrücklich erwähnt, dass ein Innengewinde in sämtlichen hier beschriebenen Einsatzfällen und Ausführungsformen, in denen Bauteile mit einem Innengewinde versehen sind, entweder bereits von vorne herein in diesem Bauteil, zum Beispiel in dem Schraubdom, ausgebildet sein kann oder aber erst durch Eindrehen einer Befestigungsschraube in das Bauteil, zum Beispiel in den Schraubdom, eingeschnitten werden kann. Ebenso versteht es sich, dass eine Befestigungsschraube in sämtlichen hier beschriebenen Einsatzfällen und Ausführungsformen in der Regel eine Schraube mit einem Schraubenkopf ist, der sich zur Herstellung der Schraubverbindung am Umfangsrandbereich der zugeordneten Durchschrauböffnung abstützt, auch wenn dies nicht explizit erwähnt oder ausgeführt ist.

Bevorzugt ist gemäß einer weiteren besonders bevorzugten Ausgestaltung vorgesehen, dass die erste Griffschale und/oder die zweite Griffschale, vorzugsweise beide Griffschalen, im montierten Zustand an dem zugeordneten Querstrebenende anliegend abgestützt ist oder sind. Insbesondere durch letztere Maßnahme gelingt eine vorteilhafte Kraftentlastung für die Schraubverbindungen, beispielsweise für den Fall, dass auf die Handgriffe eine Kraft einwirkt, wie dies beispielsweise beim Umfallen der Baumischmaschine der Fall sein kann.

Gemäß einer besonders bevorzugten Ausgestaltung ist vorgesehen, dass der wenigstens eine Handgriff, vorzugsweise bei zwei Haltegriffen beide Handgriffe, lage- und/oder positionsveränderlich an dem Handgriffelement, vorzugsweise an der wenigstens einen Querstrebe, gehaltert ist, vorzugsweise dergestalt, dass der Abstand des wenigstens einen Handgriffs, vorzugsweise zweier Handgriffe, zum Gehäuse und/oder zum Ringelement einstellbar und änderbar ist. Dies kann je Ausführungsform kontinuierlich oder stufenweise erfolgen. Eine derartige Lage- und Positionsveränderung des wenigstens einen Handgriffs, vorzugsweise beider Handgriffe, relativ zum Gehäuse ermöglicht auf besonders einfache und funktionssichere Weise eine bequeme Anpassung der Griffbreite der Baumischmaschine.

Gemäß einer hierzu besonders bevorzugten konkreten Ausgestaltung ist vorgesehen, dass wenigstens eines der einem Handgriff zugeordneten Querstrebenenden, mehrere, insbesondere zwei, voneinander in Querstreben-Längserstreckungsrichtung beabstandete Positionslöcher aufweist, denen in den unterschiedlichen Handgriffpositionen jeweils ein Dom, vorzugsweise ein Schraubdom, und eine Domöffnung, vorzugsweise eine Durchschrauböffnung, der Griffschalen zuordenbar ist. Damit kann die Lage- und Positionsveränderung des wenigstens einen Handgriffs einfach durch bloßes Umstecken zwischen voneinander beabstandeten Positionslöchern erreicht werden. Gemäß einer besonders bevorzugten konkreten Ausgestaltung ist vorgesehen, dass beide einem Handgriff zugeordneten Querstrebenenden, mehrere, insbesondere zwei, voneinander in Querstreben-Längserstreckungsrichtung beabstandete Positionslöcher aufweisen, so dass die Griffschalen zur Lage- und Positionsveränderung für eine maximale Griffbreite den lageäußeren Positionslöchern oder für eine reduzierte Griffbreite einem inneren Paar von Positionslöchern zuordenbar sind. Beispielsweise kann hierzu konkret vorgesehen werden, dass die Positionslöcher an den Querstrebenenden jeweils einen Abstand von 10 mm bis 50 mm aufweisen und/oder dass an den Querstrebenenden jeweils eine gleiche Anzahl von Positionslöchern ausgebildet ist. Damit lassen sich alle gängigen Griffbreiten auf einfache und funktionssichere Weise einstellen.

Gemäß einer weiteren besonders bevorzugten Ausgestaltung ist vorgesehen, dass die Querstreben die an diesen festgelegten Handgriffe wenigstens zum Teil mit einem Fallschutzüberstand überragen, wobei bevorzugt vorgesehen ist, dass der Fallschutzüberstand durch ein an den Querstrebenenden anordenbares, vorzugsweise aufsteckbares, Pufferelement, bevorzugt aus einem Kunststoffmaterial, höchst bevorzugt aus einem Elastomermaterial, gebildet ist, und/oder dass das Pufferelement im montierten Zustand zwischen den Griffschalen verklemmt ist. Mit einem derartigen Pufferelement wird ein effektiver Fallschutz zur Verfügung gestellt, der zudem noch auf einfache Weise an die unterschiedlichen Lagen bzw. Positionen eines Handgriffs relativ zum Gehäuse angepasst werden kann. Dies gelingt insbesondere mit einer konkreten Ausgestaltung, bei der vorgesehen ist, dass das Pufferelement, bezogen auf die Längserstreckungsrichtung der Querstreben und/oder für eine Anpassung an unterschiedliche Handgriffpositionen, verschiebbar an den Querstrebenenden gehaltert ist und/oder bei der vorgesehen ist, dass das Pufferelement auf gegenüberliegenden, den Griffschalen zugewandten Seiten jeweils wenigstens ein Rastelement, vorzugsweise wenigstens eine Rastnut aufweist, das mit wenigstens einem Rastgegenelement, vorzugsweise wenigstens einem Rastvorsprung, an den Griffschalen zusammenwirkt, insbesondere dergestalt, dass diese form- und/oder konturangepasst ineinander eingreifen.

Gemäß einer weiteren besonders bevorzugten Ausgestaltung ist das Ringelement vorzugsweise unter Zwischenschaltung eines Anschluss- und/oder Isolationsrings, der den Gehäuseinnenraum wenigstens bereichsweise oder abschnittsweise, vorzugsweise vollständig, ringförmig umgibt und/oder der an einem die Gehäuseöffnung des unteren Gehäuseteils ausbildenden Öffnungsrandbereich des unteren Gehäuseteils abgestützt und/oder befestigt ist, mit dem unteren Gehäuseteil verbunden. Die in Verbindung mit dem Anschluss- und/oder Isolationsring verwendeten Begrifflichkeiten "ringförmig" und "abschnittsweise" sind ausdrücklich in einem sehr weiten Sinne zu verstehen und umfassen alle diejenigen Ausgestaltungen und/oder Ausführungsformen, bei denen eine irgendwie geartete umfangsseitige Abstützung des Anschluss- und/oder Isolationsrings an einem oder mehreren definierten Bereichen des Öffnungsrandbereichs des unteren Gehäuseteils erfolgt, sei es, dass der Anschluss- und/oder Isolationsring ringförmig geschlossen oder mit Bezug auf die Umfangsrichtung Unterbrechungen zur Ausbildung segmentartiger Abschnitte aufweist. Auch von einer Kreisringform abweichende Formgebungen, zum Beispiel eckig, oval oder dergleichen, sind jederzeit möglich und von dem Begriff "ringförmig" bzw. "Ring" umfasst. Dementsprechend kann der Anschluss- und/oder Isolationsring als in Umfangsrichtung umlaufender durchgängiger Ring ausgebildet sein oder durch mehrere voneinander in Umfangsrichtung beabstandete Ringsegmente gebildet sein. Der besondere Vorteil eines derartigen Anschluss- und/oder Isolationsrings liegt zum einen darin, dass er im Gehäuseinnenraum eine Isolationsebene, insbesondere eine weitere Isolationsebene ausbildet, so dass elektrische Schutzmaßnahmen reduziert werden können, beispielsweise auf einen Schutzleiter bei den Kabelverbindungen im Gehäuseinnenraum verzichtet werden kann. Zudem erhöht ein derartiger Anschluss-/oder Isolationsring auch die konstruktive Flexibilität der Baumischmaschine wesentlich, da dieser vorteilhaft zur Anschraubung eines Gehäusedeckels und/oder zur Auflage und Zentrierung eines Elektronikmoduls verwendet werden kann, was nachstehend noch näher erläutert wird.

Für eine funktionssichere Auflage und Abstützung des Anschluss- und/oder Isolationsrings ist gemäß einer besonders bevorzugten konkreten Ausgestaltung vorgesehen, dass der Öffnungsrandbereich des unteren Gehäuseteils eine umfangsseitig wenigstens bereichsweise oder abschnittsweise umlaufende Abstütz- und Aufnahmefläche aufweist, auf der der Anschluss- und/oder Isolationsring aufliegt. Gemäß einer besonders bevorzugten und in Verbindung mit der Herstellung des Gehäuses einfach ausbildbaren Ausführungsform ist vorgesehen, dass die Abstütz- und Aufnahmefläche durch am Öffnungsrandbereich ausgebildete und umfangsseitig voneinander beabstandete Rippen gebildet ist. Diese Rippen können gegebenenfalls in einer vorteilhaften Doppelfunktion auch Bestandteil einer Luftzuführung sein, die beispielsweise durch im Bereich dieser Rippen ausgebildete gehäuseseitige Lüftungsschlitze gebildet ist, über die Kühlluft in den Gehäuseinnenraum einströmen kann.

Gemäß einer weiteren besonders bevorzugten konkreten Ausgestaltung ist vorgesehen, dass die Abstütz- und Aufnahmefläche gegenüber einer außenumfangsseitig umlaufenden Öffnungsrandkante des Öffnungsrandbereichs nach unten versetzt ist, vorzugsweise um die Dicke bzw. Materialstärke des Anschluss- und/oder Isolationsrings dergestalt nach unten versetzt ist, dass die Oberkante der Öffnungsrandkante im Wesentlichen oberflächenbündig zu einer Oberseite des Anschluss- und/oder Isolationsrings liegt und diese zusammen eine, vorzugsweise ebene, Auflagefläche für das Ringelement des Querbügels ausbilden. Damit wird eine vorteilhafte flächige und spaltfreie Auflagemöglichkeit für das Ringelement des Querbügels zur Verfügung gestellt, so dass dieser funktionssicher und fest mit dem Öffnungsrandbereich verbunden bzw. am Öffnungsrandbereich festgelegt werden kann.

Für eine besonders vorteilhafte Anbindung des Ringelementes am Öffnungsrandbereich ist gemäß einer konkreten Ausgestaltung vorgesehen, dass die Abstütz- und Aufnahmefläche mehrere voneinander in Umfangsrichtung des Öffnungsrandbereichs beabstandete Schraubdome mit einem Innengewinde aufweist, denen Durchschrauböffnungen am Anschluss- und/oder Isolationsring und Durchschrauböffnungen am Ringelement zugeordnet sind, so dass Befestigungsschrauben zur Fixierung des Ringelementes an dem unteren Gehäuseteil von der Oberseite des Ringelementes her durch die Durchschrauböffnungen am Anschluss- und/oder Isolationsring und durch die Durchschrauböffnungen am Ringelement hindurch in die Schraubdome einschraubbar sind. Gemäß einer hierzu weiteren bevorzugten optionalen Ausgestaltung ist vorgesehen, dass die Schraubdome zapfenartig von der Abstütz- und Aufnahmefläche abragen und wenigstens in die zugeordneten Durchschrauböffnungen am Anschluss- und/oder Isolationsring einragen. In diesem Zusammenhang ist es weiter vorteilhaft, wenn die Durchschrauböffnungen am Anschluss- und/oder Isolationsring rohrstutzenartig ausgebildet sind und sich im montierten Zustand mit ihrem freien endseitigen Stirnseitenbereich unter Aufnahme des jeweiligen Schraubdoms im Inneren der Durchschrauböffnung um den jeweils zugeordneten Schraubdom herum auf einem Abstützbereich der Abstütz- und Aufnahmefläche abstützen. Insgesamt ergibt sich mit einem derartigen Aufbau eine besonders zuverlässige und funktionssichere, zentrierte Aufnahme und Abstützung des Anschluss- und/oder Isolationsrings am Öffnungsrandbereich des unteren Gehäuseteils. Damit ist zudem weiter sichergestellt, dass der Anschluss- und/oder Isolationsring immer in der richtigen Position am unteren Gehäuseteil montiert ist. Ein Fehlverbau wird somit zuverlässig verhindert.

Weiter ist gemäß einer besonders bevorzugten Ausgestaltung vorgesehen, dass die Abstütz- und Aufnahmefläche mehrere voneinander in Umfangsrichtung des Öffnungsrandbereichs beabstandete Zentrierzapfen aufweist, denen Zentrieröffnungen zumindest am Ringelement (zum Beispiel bei einer segmentartigen Ausgestaltung des Anschluss- und/oder Isolationsrings) zugeordnet sind oder denen Zentrieröffnungen am Anschluss- und/oder Isolationsring und Zentrieröffnungen am Ringelement zugeordnet sind. In diesem Fall ist bevorzugt vorgesehen, dass die Zentrierzapfen von der Abstütz- und Aufnahmefläche abragen und (gegebenenfalls zusätzlich durch die Zentrieröffnungen am Anschluss- und/oder Isolationsring hindurch) von unten her in Richtung der zugeordneten Zentrieröffnungen am Ringelement ragen bzw. zumindest bereichsweise in die zugeordneten Zentrieröffnungen am Ringelement einragen. Diese Zentrierzapfen können somit zum einen der funktionssicheren Positionierung des Ringelementes auf dem Anschluss- und/oder Isolationsring und zum anderen in einer Doppelfunktion auch noch als Zentrierzapfen für den Anschluss- und/oder Isolationsring selbst dienen. Ein Fehlverbau von sowohl von dem Anschluss- und/oder Isolationsring bzw. dem Ringelement und damit dem Querbügel kann somit funktionssicher und zuverlässig ausgeschlossen werden.

Gemäß einer weiteren besonders bevorzugten Ausgestaltung wird weiter vorgeschlagen, dass der Gehäusedeckel im montierten Zustand mit einem umfangsseitigen Randbereich auf dem Ringelement aufliegt und/oder abgestützt ist und/oder dass der Gehäusedeckel an seiner Unterseite den Zentrieröffnungen des Ringelementes zugeordnete Zentrierzapfen aufweist, die im montierten Zustand des Gehäusedeckels bereichsweise von oben her in die zugeordneten Zentrieröffnungen am Ringelement einragen, vorzugsweise dergestalt einragen, dass die freien Enden der gehäusedeckelseitigen Zentrierzapfen einen Spaltabstand zu den abstütz- und aufnahmeflächenseitigen Zentrierzapfen aufweisen, die ebenfalls in die Zentrieröffnungen eingreifen. Damit dienen die Zentrieröffnungen am Ringelement in einer vorteilhaften Doppelfunktion einerseits zur positionsrichtigen Anordnung des Ringelementes und damit des Querbügels am unteren Gehäuseteil und zudem zur positionsrichtigen Anordnung des Deckels auf dem Ringelement bzw. dem unteren Gehäuseteil.

Wie bereits zuvor erwähnt, ist es in Verbindung mit den eben beschriebenen Ausführungsformen besonders vorteilhaft, wenn das Ringelement im montierten Zustand mit einem, vorzugsweise ebenen, Auflageflächenbereich flächig und in einer Anlageverbindung auf der dem Ringelement zugewandten, vorzugsweise ebenen, Oberseite des Anschluss- und/oder Isolationsring aufliegt. Damit gelingt eine spaltfreie Auflage und eine zuverlässige und funktionssichere Festlegung des Querbügels am Gehäuse.

Der Gehäusedeckel ist gemäß einer weiteren besonders bevorzugten konkreten Ausgestaltung, vorzugsweise unter zusätzlicher abstützender Auflage eines umfangsseitigen Randbereichs des Gehäusedeckels auf dem Ringelement, mit dem Anschluss- und/oder Isolationsring mittels wenigstens einer Verbindungseinrichtung verbunden, bevorzugt lösbar verbunden, höchst bevorzugt mittels wenigstens einer Schraubverbindung als Verbindungseinrichtung verschraubt. Eine derartige Anbindung bzw. insbesondere Verschraubung des Gehäusedeckels mit dem Anschluss- und/oder Isolationsring hat den Vorteil, dass damit Kräfte, die beispielsweise über dem Gehäusedeckel, zum Beispiel bei einem Falltest, auf das Gehäuse einwirken, nicht mehr direkt vom Gehäusedeckel auf das untere Gehäuseteil übertragen werden, sondern allein vom Gehäusedeckel absorbiert und zurückgegeben werden können. Dadurch können Zerstörungen des als Motorgehäuse fungierenden unteren Gehäuseteils vorzugsweise vermieden werden. Durch die Separierung des Gehäusedeckels wird eine andere Krafteinleitung und -umleitung erreicht, so dass die auf das Gehäuse einwirkenden Kräfte besser beherrschbar und verteilbar sind. Der Anschluss- und/oder Isolationsring dient hierbei als nachgebendes Element, so dass die Verschraubung des Gehäusedeckels keinen Schaden nimmt.

Zur Festlegung des Gehäusedeckels am Anschluss- und/oder Isolationsring ist bevorzugt vorgesehen, dass der Anschluss- und/oder Isolationsring mehrere voneinander in Umfangsrichtung beabstandete Einschraubelemente mit einem Innengewinde aufweist, denen am Gehäusedeckel ausgebildete, insbesondere in Umfangsrichtung voneinander beabstandete, deckelseitige Durchschrauböffnungen dergestalt zugeordnet sind, dass zur Herstellung einer Schraubverbindung eine Befestigungsschraube von der Deckelaußenseite durch die jeweilige Durchschrauböffnung hindurch in das zugeordnete Einschraubelement einschraubbar ist.

Gemäß einer besonderes bevorzugten Ausgestaltung können die Einschraubelemente durch von dem Anschluss- und/oder Isolationsring in Richtung Gehäusedeckel abragende zapfenartige Schraubdome gebildet sein, wobei bevorzugt vorgesehen ist, dass die Schraubdome Domausnehmungen im Ringelement zugeordnet sind, bevorzugt die Schraubdome in Domausnehmungen im Ringelement eingreifen oder durchgreifen, höchst bevorzugt die Schraubdome Domausnehmungen im Ringelement dergestalt durchgreifen, dass sie das Ringelement auf der dem Gehäusedeckel zugewandten Seite überragen. Die Domausnehmungen können hierbei beispielsweise am Innenrand der Ringöffnung des Ringelementes ausgebildete Ausnehmungen sein, um nur ein Beispiel zu nennen. Mit derartigen zapfenartigen Schraubdomen als Einschraubelemente des Anschluss- und/oder Isolationsrings gelingt eine besonders bevorzugte Kraftentlastung der Schrauben, insbesondere dann, wenn der Gehäusedeckel gemäß einer weiteren besonders bevorzugten Ausgestaltung, der vorzugsweise ein Gehäusedeckel mit einer Ausnehmung ist, kuppelartig gewölbt ist und einen in Umfangsrichtung umlaufenden seitlichen Wandbereich aufweist, in dem die deckelseitigen Durchschrauböffnungen in Umfangsrichtung voneinander beabstandet ausgebildet sind. Denn in Verbindung mit einer derartigen Ausführungsform ist es dann möglich, dass die deckelseitigen Durchschrauböffnungen durch von der Unterseite des seitlichen Wandbereichs abragende zapfenartige Rohrstutzen gebildet sind, die im montierten Zustand mit den Einschraubelementen fluchten und unmittelbar an diese angrenzen, vorzugsweise mit einem definierten Spaltabstand an diese angrenzen an diesen anliegen.

Gemäß einer weiteren besonders bevorzugten Ausgestaltung ist vorgesehen, dass der, vorzugsweise kuppelartig gewölbte, Gehäusedeckel im montierten Zustand mit einem umfangsseitigen Randbereich auf dem Ringelement aufliegt und/oder abgestützt ist, vorzugsweise dergestalt aufliegt und/oder abgestützt ist, dass der Gehäusedeckel im Wesentlichen der Außenumfangskontur des Ringelementes folgt und/oder dass die Befestigungsschrauben, die zur Festlegung des Ringelementes am unteren Gehäuseteil dienen, im Inneren des Gehäusedeckels liegen. Damit wird insgesamt ein großflächiger Gehäusedeckel ausgebildet, was vorteilhaft in Verbindung mit einer Ausführungsform ist, bei der der Gehäusedeckel auch mit einer Anzeige- und/oder Bedieneinrichtung ausgestattet ist. Zudem können dann die Befestigungsschrauben zur Festlegung des Ringelementes vorteilhaft im Inneren des Gehäusedeckels liegen, so dass diese nicht von außen her frei zugänglich sind.

Gemäß einer weiteren besonders bevorzugten Ausgestaltung ist vorgesehen, dass der Anschluss- und/oder Isolationsring eine Halteeinrichtung für die Steuereinrichtung bzw. das Elektronikmodul aufweist oder ausbildet, auf dem die Steuereinrichtung bzw. das Elektronikmodul abgestützt und/oder gelagert ist. Wie bereits zuvor ausgeführt ist, dient hier somit der Anschluss- und/oder Isolationsring in einer weiteren zusätzlichen Funktion vorteilhaft als Halteeinrichtung für ein weiteres Bauteil, nämlich für das Elektronikmodul, das im Gehäuseinnenraum, bevorzugt im Bereich des Gehäusedeckels, angeordnet ist.

Besonders bevorzugt ist hierbei eine Ausführungsform, bei der die Halteeinrichtung durch mehrere in Umfangsrichtung des Anschluss- und/oder Isolationsrings voneinander beabstandete Halteelemente gebildet ist, denen jeweils ein Haltegegenelement am Elektronikmodul, vorzugsweise am Außenumfang des Elektronikmoduls und/oder an der Unterseite des Elektronikmoduls zugeordnet sind. Beispielhaft können die Halteelemente auf einfache Weise durch Halteringe mit einer Ringöffnung gebildet sein, denen jeweils ein Haltezapfen als Haltegegenelement am Elektronikmodul dergestalt zugeordnet ist, dass ein Haltezapfen im montierten Zustand des Elektronikmoduls in der Ringöffnung eines zugeordneten Halterings aufgenommen und gehaltert ist. Auch eine kinematische Umkehrung ist selbstverständlich möglich, das heißt eine Anordnung von Halteringen am Elektronikmodul und eine Anordnung von Haltezapfen am Anschluss- und/oder Isolationsring. Mit einer derartigen konkreten Ausgestaltung gelingt eine einfache Halterung und Zentrierung des Elektronikmoduls im Gehäuseinnenraum. Insbesondere in Verbindung mit einer Ausführungsform, bei der das Elektronikmodul mit seiner Sichtseite, insbesondere mit seiner eine Anzeige- und/oder Bedieneinrichtung aufweisenden Sichtseite, formschlüssig am Gehäusedeckel anliegt, ergibt sich, selbst wenn dies natürlich grundsätzlich der Fall sein könnte, keine weitere Notwendigkeit für eine Festlegung des Elektronikmoduls über beispielsweise Schraubverbindungen oder dergleichen, da dann das Elektronikmodul bei einer derartigen Ausführungsform funktionssicher zwischen dem Gehäusedeckel einerseits und dem Anschluss- und/oder Isolationsring gehalten, insbesondere verklemmt ist.

Eine vorteilhafte Bauteilintegration ergibt sich dann, wenn sich die Halteelemente in Radialrichtung gesehen unmittelbar an die Einschraubelemente anschließen, insbesondere die Halteelemente materialeinheitlich und einstückig mit den Einschraubelementen verbunden sind und/oder die Halteelemente vom Öffnungsrandbereich weg in die Gehäuseöffnung des unteren Gehäuseteils einragen.

Für eine, in Abhängigkeit von den einwirkenden Kräften, elastisch rückfedernde Anbindung des Elektronikmoduls am Anschluss- und/oder Isolationsring bzw. des Gehäusedeckels am Anschluss- und/oder Isolationsring kann vorgesehen sein, dass die Halteelemente bzw. die Einschraubelemente elastisch rückfedernd am Anschluss- und/oder Isolationsring angebunden sind. Dies kann beispielsweise durch einen einfach herstellbaren Ein- und/oder Freischnitt am Anschluss- und/oder Isolationsring erfolgen, so dass die Halteelemente und/oder die Einschraubelemente, insbesondere deren funktionsintegrierter Bauteilverbund bereichsweise freihängend am Anschluss- und/oder Isolationsring angebunden sind. Dadurch kann in Verbindung mit auf das Gehäuse einwirkenden Kräften eine vorteilhafte Kraftaufnahme realisiert werden, die hilft, Beschädigungen im Bereich des Gehäuses bzw. des Elektronikmoduls vorzubeugen. Eine derartige Anbindung hat somit insbesondere auch den Vorteil, dass damit das Elektronikmodul, zum Beispiel bei einem Falltest, zuverlässig geschützt wird.

Der Anschluss- und/oder Isolationsring kann bevorzugt aus jedem geeignetem Material, insbesondere aus einem elektrisch nicht-leitenden Material, vorzugsweise aus Kunststoff, hergestellt sein.

Zudem kann der Anschluss- und/oder Isolationsring, vorzugsweise auf seiner dem Ringelement abgewandten Unterseite oder im Bereich seiner dem Ringelement abgewandten Unterseite, wenigstens einen Distanzhalter aufweisen oder im Zusammenwirken mit wenigstens einer Distanzhalterwand des unteren Gehäuseteils wenigstens einen Distanzhalter ausbilden, vorzugsweise um elektrische Leitungen auf Abstand zu definierten Bauteilen, insbesondere auf Abstand zum Ringelement zu halten. Zudem können dadurch elektrische Leitungen auf einfache und vorteilhafte Weise im wandnahen Bereich des unteren Gehäuseteils gebündelt zu einem Anschlusselement, beispielsweise zu einem Steckverbinder im Gehäuseinnenraum und/oder zum Antriebsmotor und/oder zum Elektronikmodul, und/oder nach außerhalb des Gehäuses geführt werden. Damit wird eine vorteilhafte Luft- und Kriechstrecke zwischen den elektrischen Leitungen und dem bevorzugt als Metall- bzw. Stahlbügel ausgebildeten Querbügel des Handgriffelementes geschaffen. Zudem wird dadurch der Freiheitsgrad der elektrischen Leitungen vorteilhaft begrenzt und eine kurze Kabelführung ermöglicht.

Gemäß einer weiteren besonders bevorzugten Ausgestaltung weist das Elektronikmodul, vorzugsweise auf einer dem Antriebsmotor zugewandten Unterseite, wenigstens eine mit der Steuereinrichtung gekoppelte Sensoreinrichtung auf, wobei der Antriebsmotor wenigstens ein mit der Rotorwelle gekoppeltes Indikatorelement aufweist, das mit der Rotorwelle im Erfassungsbereich der Sensoreinrichtung rotiert, wobei die Sensoreinrichtung geeignet und ausgebildet ist, definierte Rotationsdaten, insbesondere die Lage und/oder Position, des wenigstens einen Indikatorelementes zu erfassen und ein entsprechendes Signal an die Steuereinrichtung zu übermitteln, insbesondere zur Bestimmung der Drehzahl des Antriebsmotors. Mit einer derartigen Anordnung kann die Steuereinrichtung die Drehzahl und das Drehmoment des Antriebsmotors präzise steuern. Zudem ermöglicht die genaue Erfassung der Position des Indikatorelementes der Steuereinrichtung automatisierte Funktionen wie beispielsweise ein sanftes Starten und Stoppen des Antriebsmotors oder das Anpassen der Mischgeschwindigkeit entsprechend vordefinierter Steuerprogramme.

Der Begriff "Rotorwelle" ist im Sinne der vorliegenden Erfindungsidee ausdrücklich in einem umfassenden Sinne zu verstehen und soll ausdrücklich nicht nur auf solche Anwendungen bezogen sein, in denen der Antriebsmotor durch einen Elektromotor gebildet ist. Vielmehr steht die Begrifflichkeit "Rotorwelle" in all denjenigen Fällen, in denen der Antriebsmotor nicht durch einen Elektromotor gebildet ist, ausdrücklich stellvertretend für den Begriff "Motorausgangswelle" oder "Motorabtriebswelle".

Die Sensoreinrichtung kann beispielsweise durch einen magnetoresistiven Sensor, bevorzugt durch einen Hallsensor, gebildet sein, wobei das wenigstens eine Indikatorelement in diesem Fall dann bevorzugt durch ein Magnetelement gebildet ist, das vorzugsweise durch einen Magneten, beispielsweise einen Permanentmagneten als Magnetelement, oder alternativ durch ein wenigstens bereichsweise aus einem magnetischen Material hergestelltes Magnetelement gebildet ist. Mit einem derartigen magnetoresistiven Sensor gelingt insbesondere eine besonders vorteilhafte und zuverlässige Drehzahlerfassung.

Gemäß einer weiteren besonders bevorzugten Ausgestaltung, die sich insbesondere auch durch eine hohe Zuverlässigkeit und bauliche Kompaktheit auszeichnet, ist das wenigstens eine Indikatorelement Bestandteil eines Magnetrings, der mit der Rotorwelle verbunden ist, vorzugsweise mit dem in Richtung des Elektronikmoduls weisenden freien Ende der Rotorwelle verbunden ist. Der Magnetring weist hier eine Mehrzahl von in Umfangsrichtung voneinander beabstandeten Magnetelementen auf, wobei bevorzugt vorgesehen ist, dass die Sensoreinrichtung exzentrisch mit Bezug zur Drehachse des Magnetrings angeordnet ist und/oder dass die Magnetelemente, insbesondere verliersicher in Taschen des Magnetrings aufgenommen sind. Durch die exzentrische Anordnung ist auf einfache Weise sichergestellt, dass die Sensoreinrichtung nicht genau in der Todzone für die Positionserfassung der Magnetelemente des Magnetrings angeordnet ist.

Gemäß einer weiteren besonders bevorzugten Ausgestaltung kann zudem vorgesehen sein, dass der Magnetring mittels mehrerer in Umfangsrichtung beabstandeter Haltearme an der Rotorwelle, vorzugsweise an dem freien Ende der Rotorwelle abgestützt und angebunden ist, wobei bevorzugt vorgesehen ist, dass die Haltearme wenigstens bereichsweise aus einem elastischen Material hergestellte Federarme sind und/oder dass die Haltearme mit ihrem dem Magnetring abgewandten Ende an einer Stützscheibe angeordnet sind, die mit der Rotorwelle, vorzugsweise mit dem freien Ende der Rotorwelle, verbunden ist, vorzugsweise mittels einer Schraubverbindung verbunden ist. Die Verwendung mehrere Haltearme verteilt die Last gleichmäßig um den Magnetring herum und gewährleistet eine stabile und ausgewogene Befestigung an der Rotorwelle, wodurch das Risiko von Vibrationen oder Unwuchten während des Betriebs der Baumischmaschine vermieden wird. Insbesondere für den Fall, dass die Haltearme aus einem elastischen Material hergestellt sind, bieten diese genügend Flexibilität und Dämpfungseigenschaften, die dazu beitragen, Vibrationen und Stöße zu absorbieren, die während des Betriebs der Baumischmaschine und vor allem auch beim Falltest auftreten können.

Gemäß einer weiteren besonders bevorzugten Ausgestaltung ist vorgesehen, dass die Rotorwelle wenigstens auf der dem Magnetring zugewandten Seite in einem Wälzlager drehbar gelagert ist, dessen innerer Lagerring und/oder dessen äußerer Lagerring, vorzugsweise dessen äußerer Lagerring, wenigstens bereichsweise aus einem Elastomermaterial hergestellt ist. Eine derartige Ausgestaltung bietet einen zusätzlichen Schutz vor Vibrationen, da das Elastomermaterial Vibrationen absorbieren kann

Gemäß einer weiteren besonders bevorzugten Ausführungsform ist vorgesehen, dass das Elektronikmodul, vorzugsweise auf einer dem Antriebsmotor zugewandten Unterseite, wenigstens einen Steckanschluss für wenigstens eine Kabelverbindung, vorzugsweise für einen mehrere elektrische Leitungen bündelnden Steckverbinder eines Kabelbaums, aufweist, mittels der die elektronischen Komponenten der Baumischmaschine, insbesondere die Betätigungseinrichtung und der Antriebsmotor, mit der Steuereinrichtung elektrisch verbindbar sind. Damit ergibt sich eine funktionssichere und vorteilhafte Kontaktierung der elektrischen Komponenten beim Auf- bzw. Einsetzen des Elektronikmoduls, was hilft eine aufwendige Verkabelung mit der Gefahr eines Fehlverbaus zu vermeiden.

Gemäß einer weiteren besonders bevorzugten Ausgestaltung ist der Antriebsmotor als Elektromotor, vorzugsweise als bürstenbehafteter Elektromotor, ausgebildet, der einen Rotor und einen Stator aufweist. Weiter ist ein Kohlehalter mit wenigstens einer Kohlebürste vorgesehen, die in Kontakt mit einem Kommutator des Rotors steht. Der Kohlehalter ist hierbei bevorzugt mit einem Spaltabstand auf einer Montagefläche im Innenraum des Gehäuses, insbesondere im Bereich des unteren Gehäuseteils, angeordnet, vorzugsweise lösbar angeordnet. Der Spaltabstand zwischen dem Kohlehalter und der Montagefläche ermöglicht eine effektive Umströmung des Kohlehalters mit Kühlluft. Dies hilft, eine Überhitzung der Kohlebürsten zu verhindern und damit die Lebensdauer der elektrischen Komponenten zu verlängern. Zudem gelingt damit eine effiziente Wärmeableitung von den Kohlebürsten und den anderen zugeordneten elektrischen Komponenten, das heißt durch den Spaltabstand kann die Wärme noch schneller an die umgebende Luft abgegeben werden, was dazu beiträgt, die Betriebstemperatur niedrig zu halten und die Leistungsfähigkeit der Maschine zu verbessern.

Gemäß einer hierzu bevorzugten konkreten Ausgestaltung ist vorgesehen, dass die Montagefläche durch voneinander beabstandete Auflagerippen gebildet ist, auf denen der Kohlehalter mit einer Auflagefläche aufliegt. Für eine sichere und funktionssichere Positionierung des Kohlehalters im Gehäuseinnenraum ist vorgesehen, dass die Montagefläche Zentrierzapfen aufweist, denen Zentrierausnehmungen am Kohlehalter zugeordnet sind. Auch hier ist wiederum eine kinematische Umkehrung grundsätzlich möglich, das heißt dass die Montagefläche auch Zentrierausnehmungen aufweisen kann, denen Zentrierzapfen am Kohlehalter zugeordnet sind.

Besonders bevorzugt ist die Auflagefläche des Kohlehalters durch eine Basisplatte gebildet, die mittels einer Rastverbindung, beispielsweise einer Einhak- und Schnappverbindung, an der Montagefläche lösbar festgelegt ist. Dies ermöglicht eine leichte Montage und Demontage des Kohlehalters, zum Beispiel in Verbindung mit Reinigungszwecken bzw. beim Austausch der Kohlebürsten.

Um für eine effiziente Kühlung des vorzugsweise durch einen Elektromotor gebildeten Antriebsmotors zu sorgen ist gemäß einer besonders bevorzugten Ausgestaltung vorgesehen, dass das Gehäuse, vorzugsweise das untere Gehäuseteil, wenigstens eine Lufteinlassöffnung aufweist, die geeignet und ausgebildet ist, Luft, vorzugsweise Kühlluft, in den Gehäuseinnenraum einströmen zu lassen. Um die erwärmte Kühlluft wieder funktionssicher aus dem Gehäuseinnenraum abführen zu können, ist gemäß einer weiteren besonders bevorzugten Ausgestaltung vorgesehen, dass das Gehäuse, vorzugsweise das untere Gehäuseteil, wenigstens eine Luftauslassöffnung aufweist, die geeignet und ausgebildet ist, Luft, vorzugsweise erwärmte Abluft, aus dem Gehäuseinnenraum, vorzugsweise in die Umgebung, ausströmen zu lassen, wobei die wenigstens eine Luftauslassöffnung, bezogen auf die Hochachsenrichtung, beabstandet unterhalb der wenigstens einen Lufteinlassöffnung am Gehäuse, vorzugsweise am unteren Gehäuseteil, angeordnet ist.

Für eine effiziente Führung der Kühlluft und damit eine effiziente Kühlwirkung ist zudem bevorzugt vorgesehen, dass die wenigstens eine Lufteinlassöffnung und die wenigstens eine Luftauslassöffnung in dem Gehäuseinnenraum mittels wenigstens eines Luftströmungskanals dergestalt strömungsverbunden sind, dass die über die wenigstens eine Lufteinlassöffnung einströmende Luft den Antriebsmotor anströmt und/oder umströmt und/oder durchströmt und dass die den Antriebsmotor anströmende und/oder umströmende und/oder durchströmende Luft anschließend über den Luftströmungskanal in Richtung der wenigstens einen Luftauslassöffnung strömt. Eine besonders effiziente Kühlwirkung wird mit einer Ausführungsform erreicht, bei der die über die wenigstens eine Lufteinlassöffnung in den Luftströmungskanal einströmende Luft den als Elektromotor ausgebildeten Antriebsmotor im Bereich eines zwischen dem Rotor und dem Stator ausgebildeten Rotor-Stator-Luftspaltes, der Bestandteil des Luftströmungskanals bildet, durchströmt.

Der Luftströmungskanal kann gemäß einer weiteren besonders bevorzugten Ausgestaltung im Bereich stromauf der wenigstens einen Luftauslassöffnung und/oder im Bereich stromab des Antriebsmotors, vorzugsweise stromab des Rotor-Stator-Luftspaltes, wenigstens einen Umlenkbereich ausbilden oder aufweisen, mittels dem der Luftstrom, bezogen auf die Hochachsenrichtung, umlenkbar, zum Beispiel nach oben oder nach unten umlenkbar ist, bevorzugt um mehr als 90° umlenkbar ist, höchst bevorzugt um mehr als 90° bis 180° umlenkbar ist. Hierdurch können zum einen die Längenverhältnisse am Gehäuse, insbesondere zwischen dem den Antriebsmotor aufnehmenden Gehäuseteilbereich und einem ein Getriebe aufnehmenden Gehäuseteilbereich vorteilhaft verkürzt realisiert werden, was zu einer kompakten und vorteilhaften Optik führt. Insbesondere kann dadurch aber vor allem der Schall aufgrund der Umlenkung und Ablenkung im Bereich des Strömungskanals, zum Beispiel an den Strömungskanalwänden, gebrochen werden, was hilft, die Geräuschbildung im Betrieb zu minimieren und eine effektive Schalldämpfung bereitzustellen.

Besonders vorteilhaft ist in diesem Zusammenhang ein Aufbau, bei dem vorgesehen ist, dass im Gehäuseinnenraum ein, vorzugsweise auf der Rotorwelle des Antriebsmotors gelagertes, Lüfterrad vorgesehen ist, das im Bereich stromauf des Umlenkbereichs und stromab des Antriebsmotors, vorzugsweise stromab des Rotor-Stator-Luftspaltes, angeordnet ist und bei dessen Betätigung Luft, vorzugsweise Kühlluft, über die wenigstens eine Lufteinlassöffnung in den Luftströmungskanal saugbar ist. Für einen kompakten Aufbau kann gemäß einer weiteren bevorzugten Ausführungsform ferner vorgesehen werden, dass die wenigstens eine Luftauslassöffnung, bezogen auf die Hochachsenrichtung, oberhalb des Lüfterrades liegt.

Eine aufgrund einer mehrfachen Umlenkung besonders gute Schallreduzierung bzw. Schalldämpfung, die zudem einfach herzustellen ist, lässt sich zudem mit einem Aufbau realisieren, bei dem der Umlenkbereich insgesamt Z-förmig oder S-förmig ausgebildet ist, vorzugsweise für eine Z-förmige oder S-förmige Strömungsumlenkung und/oder für ein im Wesentlichen horizontales Ausströmen des Luftstroms aus der wenigstens einen Luftauslassöffnung.

Zudem ist für eine ausreichende Luftzufuhr und/oder Luftabfuhr ein Aufbau vorteilhaft, bei dem das Gehäuse, vorzugsweise das untere Gehäuseteil, mehrere umfangsseitig voneinander beabstandete Lufteinlassöffnungen und/oder mehrere umfangsseitig voneinander beabstandete Luftauslassöffnungen aufweist.

Eine weitere besonders vorteilhafte Schalldämpfungsmöglichkeit ergibt sich zudem mit einem Aufbau, bei dem im Bereich der wenigstens einen Luftauslassöffnung wenigstens ein schalldämpfendes Element angeordnet ist.

Ferner wird ein Verfahren zum Betreiben einer handbetätigbaren Baumischmaschine beansprucht. Die sich hierdurch ergebenden Vorteile sind identisch zu den vorstehend genannten Vorteilen der handbetätigbaren Baumischmaschine, so dass zur Vermeidung von Wiederholungen auf die zuvor gemachten Ausführungen verwiesen wird.

Die Erfindung wird nachstehend anhand einer beispielhaften Ausführungsform in Verbindung mit figürlichen Darstellungen näher beschrieben.

Es zeigen:
- Figur 1: eine perspektivische Vorderansicht einer beispielhaften Ausführungsform einer handbetätigbaren Baumischmaschine ohne Elektronikmodul und damit ohne Anzeige- und/oder Bedieneinrichtung,
- Figur 2: eine schematische perspektivische Vorderansicht einer alternativen Ausführungsform einer handbetätigbaren Baumischmaschine mit einem Elektronikmodul und einer Anzeige- und/oder Bedieneinrichtung,
- Figur 3: eine zur Figur 2 alternative Ausführungsform mit einer alternativen Anzeige- und/oder Bedieneinrichtung,
- Figur 4: eine schematische, perspektivische Unteransicht einer erfindungsgemäßen Baumischmaschine gemäß Figur 3,
- Figur 5: eine schematische Draufsicht auf die Baumischmaschine gemäß Figur 3,
- Figur 6: eine schematische Draufsicht auf die Baumischmaschine gemäß Figur 2,
- Figur 7: eine schematische perspektivische Darstellung eines Querbügels einer Handgriffeinrichtung mit Griffschalen in einer ersten Griffposition,
- Figur 8: eine der Figur 7 entsprechende Darstellung mit den Griffschalen in einer zweiten, breiteren Griffposition,
- Figur 9: schematisch einen Querschnitt durch einen Handgriff im Bereich einer Schraubverbindung,
- Figur 10: eine Detailansicht auf zwei durch Taster gebildete Interaktionselemente des in der Figur 3 gezeigten Ausführungsbeispiels,
- Figur 11: ein schematischer Querschnitt durch den in der Figur 10 gezeigten Bereich des Handgriffs,
- Figur 12: eine schematische und perspektivische Draufsicht auf den Bereich des Ringelementes eines Querbügels in einem auf das untere Schalenteil aufgesetzten und montierten Zustand, bei der der Anschluss- und/oder Isolationsring als in Umfangsrichtung umlaufender durchgängiger Ring gebildet ist,
- Figur 12a: eine zur Figur 12 alternative, schematische und perspektivische Draufsicht auf den Bereich des Ringelementes eines Querbügels in einem auf das untere Schalenteil aufgesetzten und montierten Zustand, bei der der Anschluss- und/oder Isolationsring durch voneinander beabstandete Ringsegmente gebildet ist,
- Figur 13: einen Schnitt entlang der Linie A-A der Figur 12 bei gleichzeitig aufgesetztem Gehäusedeckel,
- Figur 14: eine der Figur 12 entsprechende Darstellung ohne Querbügel,
- Figur 14a: eine der Figur 12a entsprechende Darstellung ohne Querbügel,
- Figur 15: eine Schnittansicht entlang der Linie B-B der Figur 5,
- Figur 16: eine schematische und perspektivische Draufsicht auf den Anschluss- und/oder Isolationsring mit aufgesetztem Elektronikmodul, wobei der Anschluss- und/oder Isolationsring als in Umfangsrichtung umlaufender durchgängiger Ring ausgebildet ist,
- Figur 16a: eine schematische und perspektivische Draufsicht auf den Anschluss- und/oder Isolationsring mit aufgesetztem Elektronikmodul, wobei der Anschluss- und/oder Isolationsring durch voneinander beabstandete Ringsegmente ausgebildet ist,
- Figur 17: eine Schnittdarstellung entsprechend der Linie C-C der Figur 12,
- Figur 18: eine schematische perspektivische Ansicht des Rotors mitsamt einem endseitig an der Rotorwelle angeordneten Magnetring,
- Figur 19: der Magnetring der Figur 18 in einer perspektivischen Unteransicht,
- Figur 20: der Magnetring gemäß Figur 18 und Figur 19 in einer perspektivischen Draufsicht,
- Figur 21: ein Querschnitt durch den Endbereich des Rotors bzw. der Rotorwelle mitsamt montiertem Magnetring,
- Figur 22: eine schematische perspektivische Ansicht des als Motorgehäuse fungierenden unteren Gehäuseteils mitsamt Kohlehalter,
- Figur 23: den Kohlehalter in Alleinstellung,
- Figur 24: eine schematische Schnittansicht entlang der Linie D-D der Figur 22,
- Figur 25: eine schematische Unteransicht des Elektronikmoduls,
- Figur 26: eine der Figur 12 entsprechende Darstellung mit einem im Gehäuseinnenraum angeordneten Steckverbinder,
- Figur 27: eine schematische Draufsicht auf die Anzeige- und/oder Bedieneinrichtung gemäß der Ausführungsform der Figur 2 im ausgeschalteten Zustand,
- Figur 28: eine schematische Draufsicht auf die Anzeige- und/oder Bedieneinrichtung gemäß der Ausführungsform der Figur 3 im ausgeschalteten Zustand,
- Figur 29: eine der Figur 28 entsprechende Darstellung zu Beginn der Aktivierung der Baumischmaschine,
- Figur 30: eine der Figur 29 entsprechende Darstellung nach einer Mischzeit von 1 Minute und 22 Sekunden,
- Figur 31: eine der Figur 29 entsprechende Darstellung, bei der im Unterschied zur Darstellung der Figur 29 die Drehzahl anstelle der Zeit angezeigt wird,
- Figur 32: eine der Figur 30 entsprechende Darstellung, bei der im Unterschied zur Darstellung der Figur 30 die Drehzahl anstelle der Zeit angezeigt wird,
- Figur 33: eine der Figur 27 entsprechende Darstellung bei aktivierter Baumischmaschine und niedrig eingestellter Drehzahl,
- Figur 34: eine der Darstellung der Figur 27 entsprechende Darstellung bei aktivierter Baumischmaschine und hoch eingestellter Drehzahl,
- Figur 35: ein Längsquerschnitt durch die in Figur 2 dargestellte handbetätigbare Baumischmaschine ohne schalldämpfendes Element,
- Figur 36: ein zur Figur 35 alternativer Längsschnitt durch die in der Figur 2 dargestellte handbetätigbare Baumischmaschine ohne schalldämpfendes Element,
- Figur 37: ein Längsquerschnitt durch die in Figur 2 dargestellte handbetätigbare Baumischmaschine mit schalldämpfendem Element,
- Figur 38: ein zur Figur 37 alternativer Längsschnitt durch die in der Figur 2 dargestellte handbetätigbare Baumischmaschine mit schalldämpfendem Element.

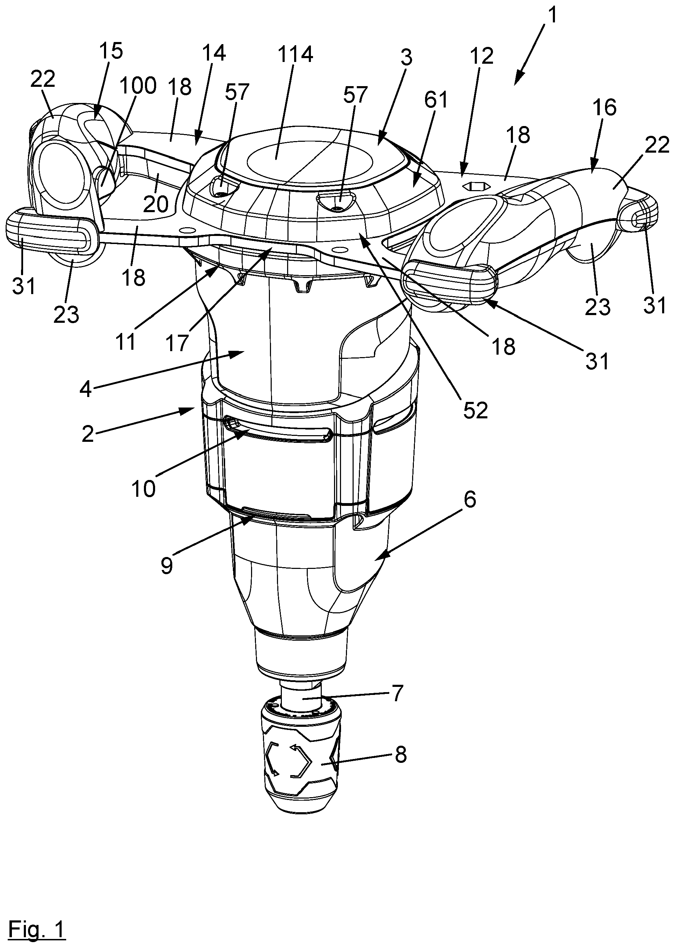

In den Figuren 1 bis 3 sind jeweils perspektivische Ansichten einer beispielhaften Ausführungsform einer erfindungsgemäßen Baumischmaschine 1 dargestellt, deren grundsätzlicher Aufbau gleich ist, die sich jedoch in noch näher zu beschreibender Weise hinsichtlich der Verwendung eines Elektronikmoduls bzw. der elektronischen Funktionseinheiten unterscheiden.

Jede dieser erfindungsgemäßen Baumischmaschinen 1 weist ein Gehäuse 2 auf, das hier zweiteilig ausgebildet ist und ein, bezogen auf die in den Figuren 1 bis 3 gezeigte Gebrauchsposition der Baumischmaschine 1, oberes Gehäuseteil aufweist, das einen Gehäusedeckel 3 ausbildet und in noch zu beschreibender Weise mit einem hier beispielhaft einteiligen und als Motorgehäuse fungierenden unteren Gehäuseteil 4 verbunden ist.

In dem Gehäuse 2 bzw. in dem unteren Gehäuseteil 4 ist ein als Elektromotor ausgebildeter Antriebsmotor 5 aufgenommen, der hier beispielhaft ferner ein Getriebe 6 aufweist und dessen Antriebswelle 7 getriebeseitig aus dem unteren Gehäuseteil 4 herausgeführt ist, wobei die Antriebswelle 7 endseitig mit einem Anschlusselement 8, beispielsweise einer Schnellverschlusskupplung, versehen ist, über den ein hier nicht dargestelltes Misch- und/oder Rührwerkzeug, beispielsweise ein Schaft eines Rührstabs der Antriebswelle 7, wirkverbindbar ist, das heißt drehantreibbar koppelbar ist.

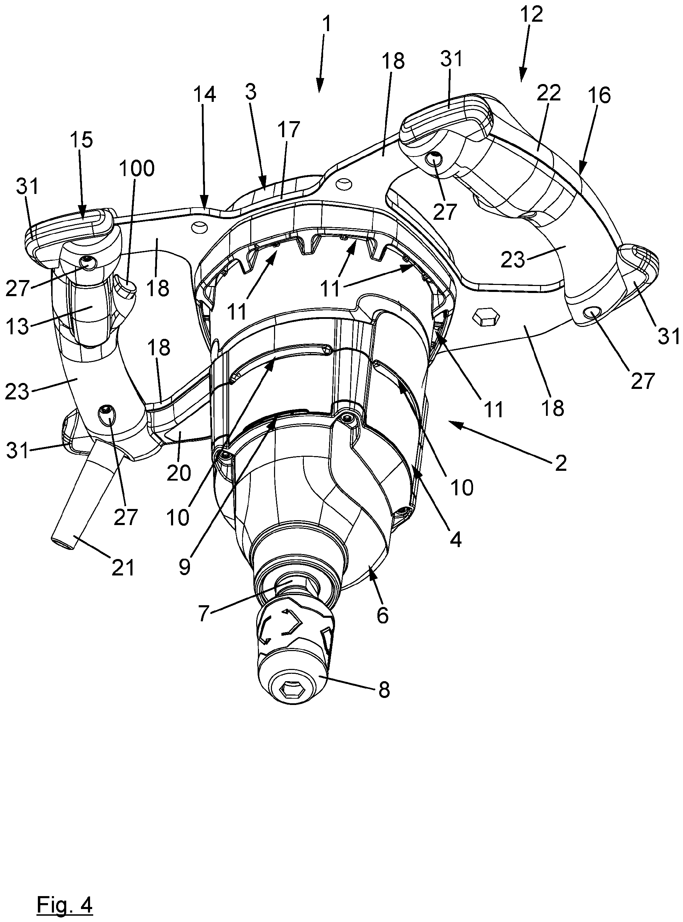

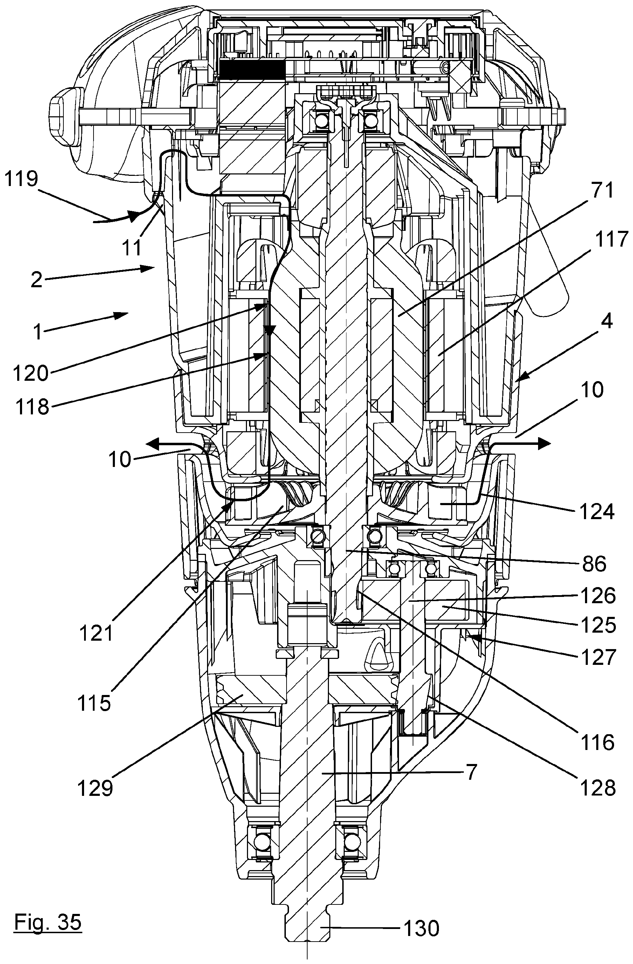

Wie dies insbesondere aus der Figur 4 ersichtlich ist, weist das untere Gehäuseteil 4 mehrere umfangsseitig voneinander beabstandete sowie in Hochachsenrichtung voneinander beabstandete und hier lediglich beispielhaft durch Luftschlitze 10 und 11 gebildete Gehäuseöffnungen auf, von denen die Luftschlitze 11 jeweils Lufteinlassöffnungen ausbilden, über die Luft als Kühlluft in das Gehäuse 2 einströmen kann, und von denen die Luftschlitze 10 jeweils Luftauslassöffnungen ausbilden, über die die erwärmte Luft ( als Abluft aus dem Gehäuse 2 ausströmen kann. Das Ansaugen der Kühlluft erfolgt hier beispielhaft über ein in den Schnittdarstellungen der Figuren 35 bis 38 gezeigtes Lüfterrad 115, das im unteren Gehäuseteil 4 im getriebenahen Bereich auf einer, eine Motorausgangswelle ausbildenden Rotorwelle 86 des Antriebsmotors 5 drehbar angeordnet ist.

Wie dies aus den Figuren 35 bis 38 ersichtlich ist, weist der als Elektromotor ausgebildete Antriebsmotor 5 einen mit der Rotorwelle 86 drehfest verbundenen Rotor 71 und einen ortsfest angeordneten Stator 117 auf, wobei die Lufteinlassöffnungen ausbildenden Luftschlitze 11 und die Luftauslassöffnungen ausbildenden Luftschlitze 10 in dem Gehäuseinnenraum 35 mittels eines Luftströmungskanals 120 dergestalt strömungsverbunden sind, dass die über die Luftschlitze 11 in den Luftströmungskanal 120 einströmende Luft den als Elektromotor ausgebildeten Antriebsmotor 5 im Bereich eines zwischen dem Rotor 71 und dem Stator 117 ausgebildeten Rotor-Stator-Luftspaltes 118, der Bestandteil des Luftströmungskanals 120 bildet, durchströmt, wobei die den Antriebsmotor 5 durchströmende Luft anschließend über den Luftströmungskanal 120 in Richtung zu den Luftauslassöffnungen ausbildenden Luftschlitzen 10 strömt.

Wie aus den Figuren 35 bis 38 gut ersichtlich ist, ist hierbei vorgesehen, dass der Luftströmungskanal 120 im Bereich stromauf der Luftauslassöffnungen ausbildenden Luftschlitze 10 und im Bereich stromab des Rotor-Stator-Luftspaltes 118 einen Umlenkbereich 121 ausbildet oder aufweist, mittels dem der Luftstrom 122, bezogen auf die Hochachsenrichtung, im hier gezeigten Ausführungsbeispiel nach oben umlenkbar ist. Hierbei wird der Luftstrom 122, wie im hier gezeigten Beispielfall gezeigt, bevorzugt um mehr als 90° bzw. um mehr als 90° bis höchsten 180° umgelenkt.

Weiter kann im Gehäuseinnenraum 35 ein, hier beispielhaft auf der Antriebswelle 7 des Antriebsmotors 5 gelagertes Lüfterrad 115 vorgesehen sein, das im Bereich stromauf des Umlenkbereichs 121 und stromab des Rotor-Stator-Luftspaltes 118 angeordnet ist und bei dessen Betätigung Kühlluft 119 über die Luftschlitze 11 in den Luftströmungskanal 120 eingesaugt wird.

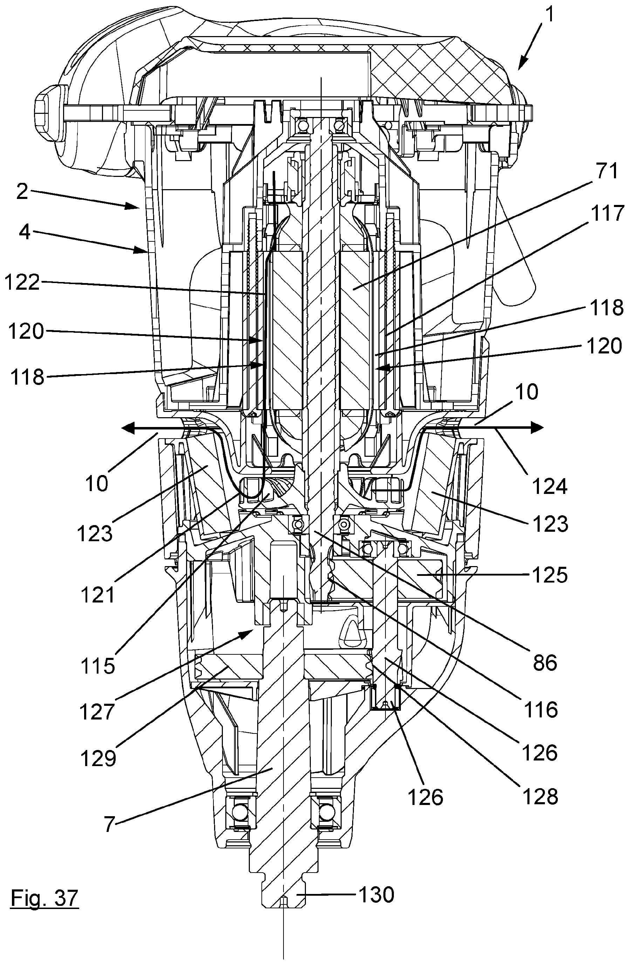

Wie aus den Figuren 35 bis 38 weiter ersichtlich ist, ist der Umlenkbereich 121 insgesamt Z-förmig oder S-förmig ausgebildet (siehe jeweils den eingezeichneten Strömungsteilbereich 124 auf der rechten Bildseite der Figuren 35 und 37) bzw. bewirkt der Umlenkteilbereich 121 eine Z-förmige bzw. S-förmige Strömungsumlenkung, um ein ausreichendes Brechen des Schalls in Verbindung mit einem im Wesentlichen horizontalen Ausströmen des Luftstroms 122 aus den Luftschlitzen 10 zu realisieren.

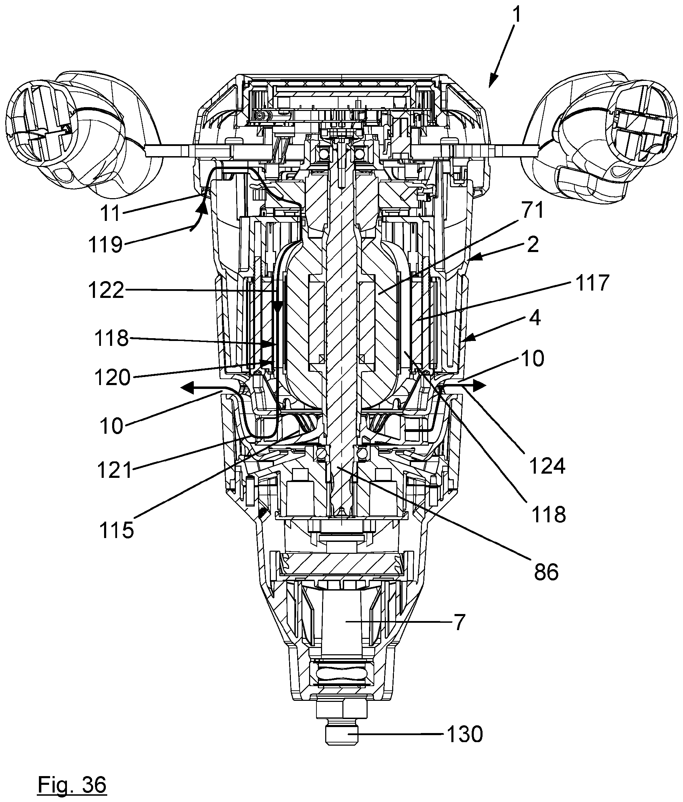

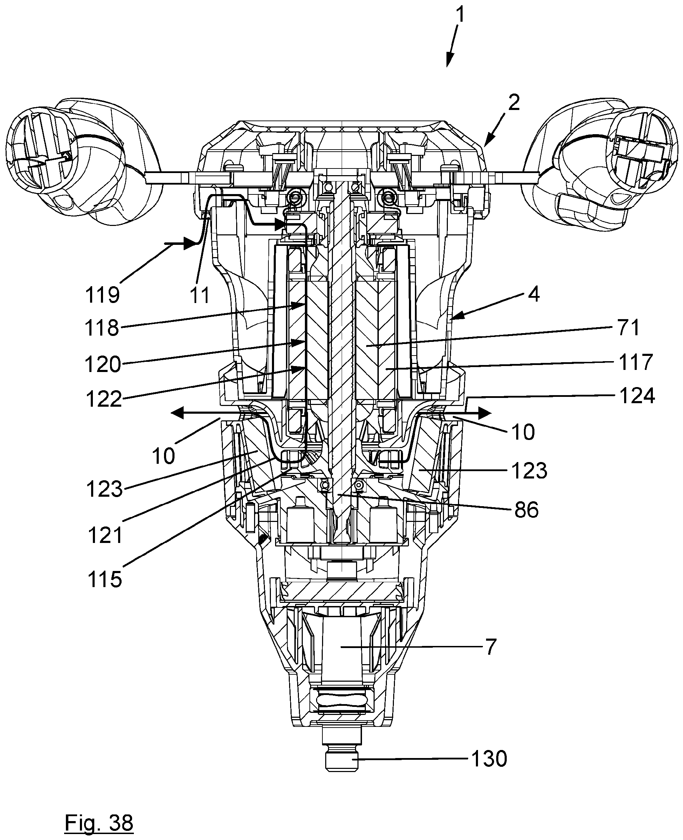

Im Unterschied zu der Ausführungsform gemäß der Figuren 35 und 36 weist die Ausführungsform der Baumischmaschine 1 gemäß der Figuren 37 und 38 zusätzlich im Bereich der Luftschlitze 10 ein schalldämpfendes Element 123 auf ist.

Die Rotorwelle 86 weist eine Außenverzahnung 116 auf, die mit einem Stirnrad 129 einer Getriebewelle 126 eines Getriebes 127 kämmt. Die Getriebewelle 126 weist weiter eine Abtriebsverzahnung 128 auf, die mit einem Stirnrad 129 der Antriebswelle 7 kämmt. Die Antriebswelle 7 ist, wie dies aus den Fig. 35 bis 38 weiter ersichtlich ist, aus dem Gehäuse 2 herausgeführt und weist endseitig ein Anschlusselement 130, zum Beispiel eine Schnellverschlusskupplung, für einen hier nicht gezeigten Schaft eines Rührstabs oder dergleichen Misch- und/oder Rührwerkzeug auf.

Bei einer Betätigung des hier beispielhaft als Elektromotor ausgebildeten Antriebsmotors 5 wird somit über die als Motorausgangswelle fungierende Rotorwelle 86 mit entsprechend definierter Getriebeübersetzung (beispielsweise von 26:1) durch das Getriebe 17 die Antriebswelle 7 der Baumischmaschine 1 drehangetrieben und damit auch ein mit dieser Antriebswelle 7 verbundenes Misch- und/oder Rührwerkzeug, wie beispielsweise ein Rührstab.

Beispielsweise lässt sich mit einem derartigen Aufbau bei Drehzahlen des Antriebsmotors 5 an der Rotorwelle 86 von 16.000 bis 17.000 U/min eine vorteilhafte Last-Drehzahl an der Antriebswelle 7 von vorzugsweise 300 U/min bis 750 U/min erreichen.

Wie dies aus den Figuren 1 bis 4 zudem weiter ersichtlich ist, weist die Baumischmaschine 1 eine Handgriffeinrichtung 12 auf, die in noch zu beschreibender Weise mit dem Gehäuse 2 verbunden ist.

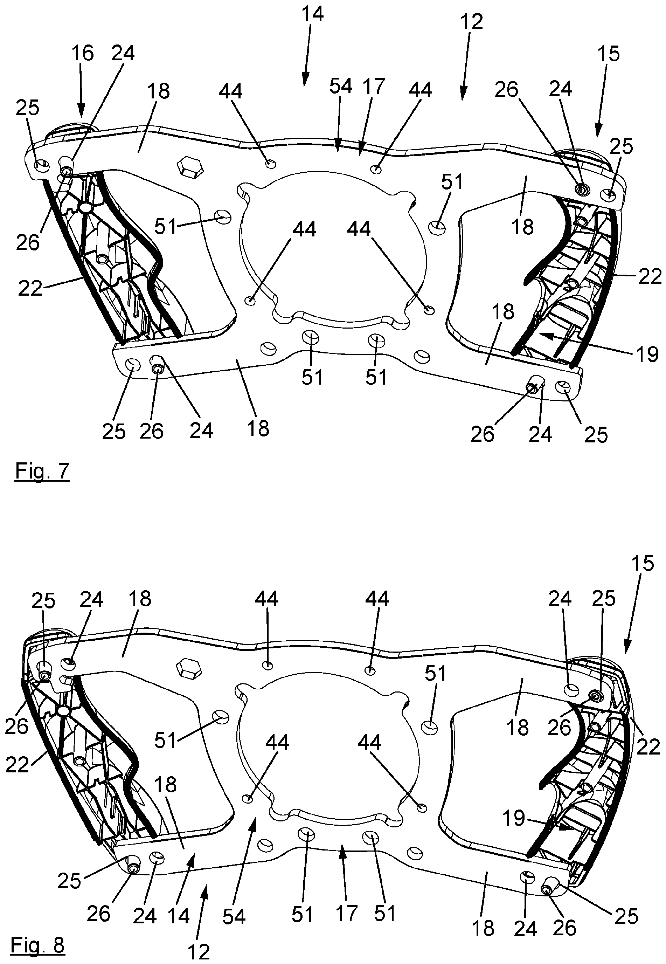

Die Handgriffeinrichtung 12 weist, wie dies ebenfalls gut aus den Figuren 1 bis 4 ersichtlich ist, einen hier einteilig ausgebildeten Querbügel 14 als Griffbügel auf, der zwei Handgriffe 15, 16 aufweist, die auf in Querrichtung gegenüberliegenden Querbügelseiten eines in einem mittleren Bereich zwischen den beiden Handgriffen liegenden Ringelementes 17 (siehe Figuren 7 und 8) angeordnet sind. Jeder Handgriff 15, 16 ist mit dem Ringelement 17, das hier beispielhaft mittig und zentral zwischen den beiden Handgriffen 15, 16 liegt, über strahlartig von dem Ringelement 17 abragende Querstreben 18 verbunden, die dergestalt voneinander beabstandet sind, dass die Querstreben 48 mitsamt ihren zugeordneten Handgriffen 15, 16 in etwa U-förmig ausgebildet sind, wobei die Handgriffe 15, 16 im Wesentlichen die U-Basis sind bzw. diese ausbilden.

Wie dies insbesondere gut aus der Figur 4 ersichtlich ist, ist eine hier beispielhaft als Handschalter ausgebildete Betätigungseinrichtung 13 der Baumischmaschine 1 Bestandteil des Handgriffs 15, wozu der Handgriff 15, wie dies insbesondere aus den Figuren 7 und 8 ersichtlich ist, einen Hohl- und/oder Aufnahmeraum 19 aufweist, in dem ein Teilbereich von der außen betätigbaren und zugänglichen Betätigungseinrichtung 13 gelagert und aufgenommen ist. Die durch einen Handschalter 13 gebildete Betätigungseinrichtung 13 ist über eine hier nicht gezeigte Kabelverbindung von der Betätigungseinrichtung 13 ausgehend zunächst im Inneren des Handgriffs 15 über eine der Querstreben 18 des Querbügels 14 nach außen hin abgekapselt mittels einer querstrebenseitig angeordneten Schutzschale 20 zum Gehäuse 2 und in noch zu beschreibender Weise weiter zu einer Steuereinrichtung bzw. zu einem Elektronikmodul geführt.

Wie dies aus der Figur 4 weiter ersichtlich ist, ist die Betätigungseinrichtung 13, bezogen auf die Gebrauchsposition der Baumischmaschine 1, auf einer Unterseite des Handgriffs 15 angeordnet, so dass eine Betätigung der Betätigungseinrichtung 13 mittels beispielsweise des Zeigefingers und/oder Mittelfingers durchgeführt werden kann.

Wie dies weiter aus der Figur 4 ersichtlich ist, ist an dem Handgriff 15 ferner ein Netzkabel 21 (hier nicht vollständig dargestellt) für eine Energieversorgung der Baumischmaschine 1 angeordnet, die vorzugsweise ebenfalls in den Hohl- und/oder Aufnahmeraum 19 des Handgriffs 15 mündet, wobei auch hier eine nicht dargestellte Kabelverbindung von dem Netzkabel 21 ausgehend über den Hohl- und/oder Aufnahmeraum 19 des Handgriffs 15 und über die Querstrebe 18 des Querbügels 14 abgekapselt mittels der Schutzschale 20 zum Gehäuse 2 und in noch zu beschreibender Weise zu den mit Energie bzw. Strom zu versorgenden elektronischen Komponenten geführt ist.

Das Netzkabel 21 ist hierbei bevorzugt an einer der Bedienperson zugewandten Handgriffseite aus dem Handgriff 15 herausgeführt.

Wie dies insbesondere aus der Zusammenschau der Figuren 7, 8 und 9 ersichtlich ist, sind die beiden Handgriffe 15, 16 jeweils durch eine obere Griffschale 22 und eine untere Griffschale 23 gebildet, die miteinander und mit den Querstreben 18 dergestalt verbunden sind, dass auf jeder Querbügelseite zwei voneinander beabstandete Querstrebenenden zweier beabstandeter Querstreben 18 zur Festlegung und Abstützung der beiden Griffschalen 22, 23 dienen, die die zugeordneten Querstrebenbereiche zwischen sich aufnehmen und vorzugsweise zwischen sich verklemmen.

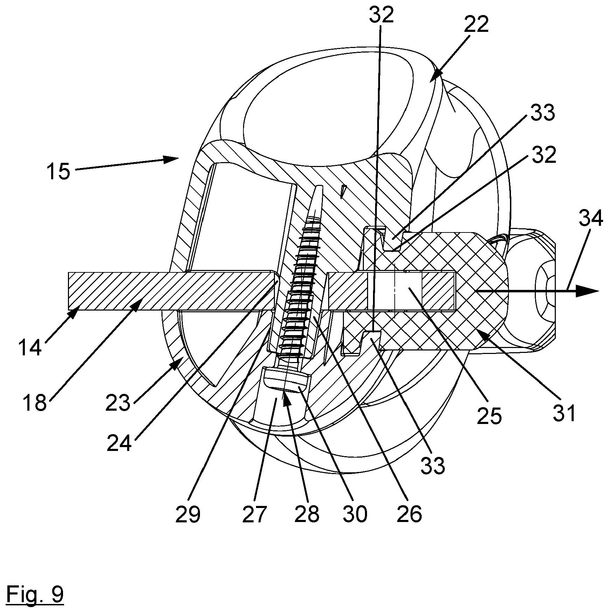

Hierzu weist jedes der einem Handgriff 15, 16 zugeordneten Querstrebenden im hier gezeigten Beispielfall zwei voneinander in Querstreben-Längserstreckungsrichtung beabstandete Positionslöcher 24, 25 auf. Zudem sind an einer ersten, oberen Griffschale 22 des Handgriffs 15, 16 zwei voneinander in Handgrifflängsrichtung beabstandete griffschalenseitige Schraubdome 26 angeordnet, die ein Innengewinde aufweisen und im montierten Zustand der Handgriffe 15, 16 einerseits jeweils einem Positionsloch 24 in den beiden Querstrebenenden zugeordnet sind und in dieses eingreifen bzw. dieses durchgreifen und die andererseits jeweils einer griffschalenseitigen Durchschrauböffnung 27 einer zweiten, unteren Griffschale 23 der Handgriffe 15, 16 zugeordnet sind (siehe insbesondere Figur 9).

Wie dies aus der Figur 9 gut ersichtlich ist, liegen die beiden Griffschalen 22, 23 im montierten Zustand an den Querstrebenenden der Querstreben 18 auf und an und sind mittels einer Schraubverbindung miteinander verbunden, wobei eine Befestigungsschraube 28 durch die Durchschrauböffnung 27 und das zugeordnete Positionsloch 24 hindurch in den zugeordneten Schraubdom 26 eingeschraubt ist. Wie dies aus der Figur 9 weiter gut ersichtlich ist, greifen die Schraubdome 26 hier im montierten Zustand zapfenartig bzw. im Wesentlichen form- und konturangepasst in eine durchschrauböffnungsseitig ausgebildete Ausnehmung 29 ein, wobei sich zudem beide Griffschalen 22, 23 jeweils zusätzlich an den Querstrebenenden anliegend abstützen.

Wie üblich, sind die Befestigungsschrauben 28 hier mit einem Schraubkopf 30 ausgebildet, der sich im montierten Zustand an einem die Durchschrauböffnung 27 umgebenden Auflagebereich abstützt.

Dadurch werden die Querstrebenenden funktionssicher und zuverlässig zwischen den beiden Griffschalen 22, 23 verklemmt. Wie dies aus der Zusammenschau der Figuren 7 und 8 gut ersichtlich ist, sind die beiden Handgriffe 15, 16, die hier durch ihre oberen Griffschalen 22 repräsentiert werden, aufgrund ihrer Anordnung an den Querstreben 18 mittels der Positionslöcher 24 näher am Ringelement 17 und damit im montierten Zustand näher am Gehäuse 2 angeordnet als dies in der Figur 8 der Fall ist, in der die Handgriffe über die äußeren Positionslöcher 25 an den Querstreben 18 befestigt sind. Dementsprechend verdeutlichen die beiden Figuren 7 und 8 schematisch und beispielhaft, dass mittels der Positionslöcher 24 und 25 unterschiedliche Griffbreiten der Handgriffeinrichtung 12 für die Baumischmaschine 1 einstellbar sind, hier also beispielsweise eine enge Griffposition (Figur 7) und eine breite Griffposition (Figur 8).

Die Positionslöcher 24, 25 jedes Querstrebenendes können dabei beispielsweise einen Abstand zwischen 10 mm und 50 mm aufweisen, zum Beispiel einen Abstand von 15 mm aufweisen. Auch wenn dies hier nicht dargestellt ist, können selbstverständlich auch unterschiedliche Anordnungen und Gruppierungen von Positionslöchern vorgesehen sein, also beispielsweise mehr als zwei Positionslöcher vorgesehen sein, oder aber auch eine unterschiedliche Anzahl von Positionslöchern vorgesehen sein, sofern dann jeweils sichergestellt ist, dass die jeweiligen Positionslöcher auch von den jeweils zugeordneten Schraubdomen 26 durchgriffen werden können. Insofern ist es bei der Auslegung der Querstreben 18 mitsamt ihren Positionslöcher 24, 25 wichtig, sicherzustellen, dass die den beabstandeten Schraubdomen 26 eines Handgriffs 15 bzw. 16 zugeordneten Paare von Positionslöchern an unterschiedlichen Querstreben 18 jeweils den gleichen Abstand voneinander aufweisen.

Die hier gezeigten Positionslöcher 24, 25 ermöglichen eine stufenweise Einstellung und Veränderung der Griffbreite. Alternativ dazu könnte aber auch eine Schlitzausnehmung vorgesehen sein, mittels der dann der Abstand gegebenenfalls auch kontinuierlich eingestellt werden könnte, insbesondere in Verbindung mit einer Verklemmung der Querstrebenenden zwischen den beiden Griffschalen 22, 23 mittels einer Schraubverbindung, wie dies in der Figur 9 gezeigt ist.

Die Griffschalen 22, 23 und damit die Handgriffe 15, 16 sind vorzugsweise aus einem Kunststoffmaterial hergestellt, während der Querbügel 14 bevorzugt aus einem Metall hergestellt ist und/oder die in den Figur 7 und 8 gezeigte flache Formgebung aufweist. Ein derartiger Griffbügel 14 kann beispielsweise aus einer Metall- oder Stahlplatte ausgeschnitten werden. Diese flache Formgebung des Querbügels 14 ist auch dann vorteilhaft, wenn diese gegebenenfalls aus einem anderen Material hergestellt ist, zum Beispiel aus einem Kunststoffmaterial. In allgemeiner Weise weist somit der Querbügel 14 einen flachen bzw. plattenförmigen Querschnitt auf, zum Beispiel mit einer rechteckigen oder gestreckten ovalen Querschnittsgeometrie.

Wie dies weiter insbesondere aus Zusammenschau der Figuren 1 bis 4 mit der Figur 9 ersichtlich ist, überragen die Querstreben 18 die an diesen festgelegten Handgriffe 15, 16 mit einem Fallschutzüberstand, der hier durch ein auf die Querstrebenenden aufsteckbares Pufferelement 31 gebildet ist, das bevorzugt aus einem Elastomermaterial hergestellt ist.

Wie dies insbesondere aus der Figur 9 ersichtlich ist, sind die Pufferelemente 31 im montierten Zustand zwischen den Griffschalen 22, 23 verklemmt.

Um insbesondere eine Anpassung der Lage der Pufferelemente 31 für die in den Figuren 7 und 8 gezeigten unterschiedlichen Griffbreiten bereitzustellen, sind die Pufferelemente 31, bezogen auf die Längserstreckungsrichtung der Querstreben verschiebbar an den Querstrebenenden gehaltert, wobei die Pufferelemente 31 jeweils auf gegenüberliegenden, den Griffschalen 22, 23 zugewandten Seiten jeweils ein Rastelement 32 aufweisen, das mit einem Rastgegenelement 33 an den entsprechend zugeordneten Griffschalen 22, 23 zusammenwirkt, so dass die Rastelemente 32 mit den Rastgegenelementen 33 insbesondere form- und/oder konturangepasst ineinander eingreifen und zusammenwirken.

In der Figur 9 ist der Beispielfall gemäß Figur 7 gezeigt, bei der sich beiden Handgriffe 15, 16 in der engen Griffposition befinden. Sofern die in der Figur 8 gezeigte breite Griffposition eingestellt werden soll, kann dann der Handgriff über das in der Figur 9 freie Positionsloch 25 an den Querstrebenenden positioniert werden. Hierzu kann dann das Pufferelement 31 in der in der Figur 9 gezeigten Weise nach außen (Pfeil 34) verschoben bzw. ummontiert werden, in der das Pufferelement 31 nach wie vor am zugeordneten Querstrebenende aufgesteckt gehaltert ist, jedoch das Positionsloch 25 freigibt (hier nicht dargestellt).

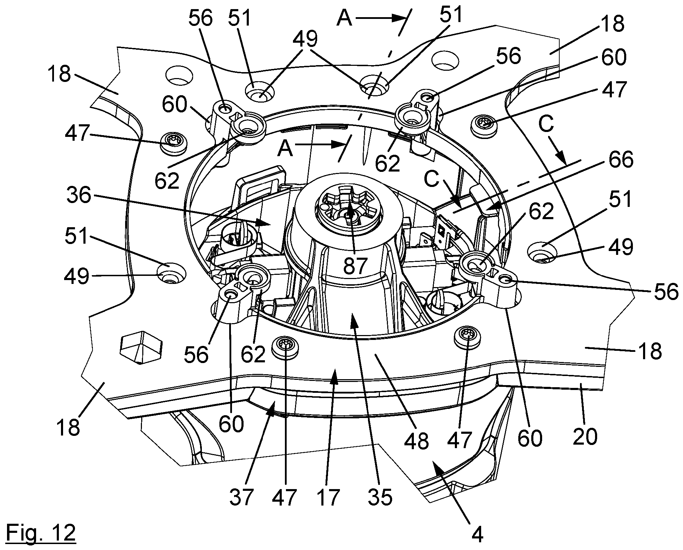

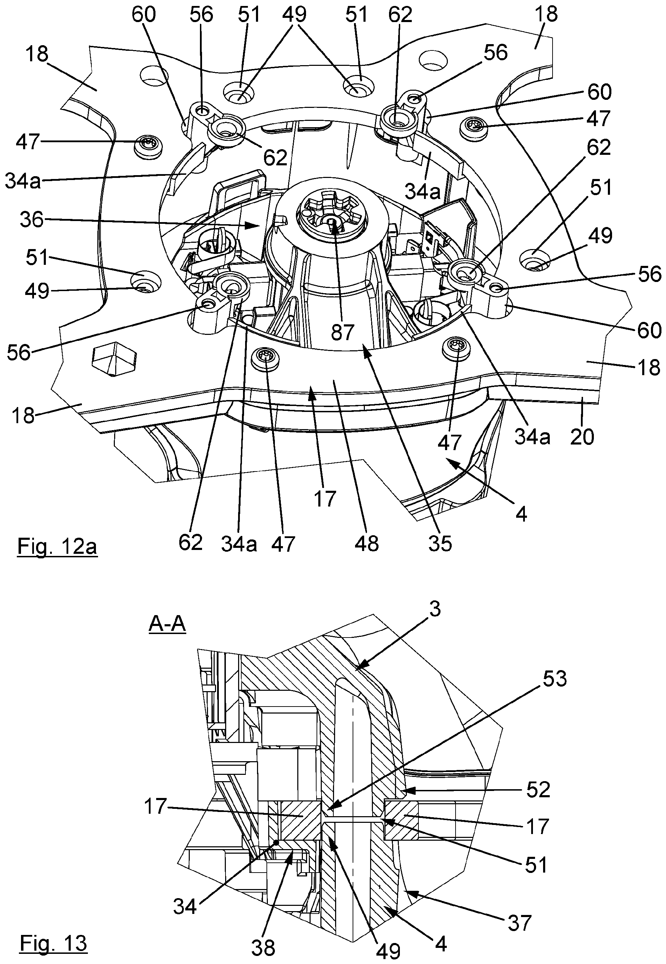

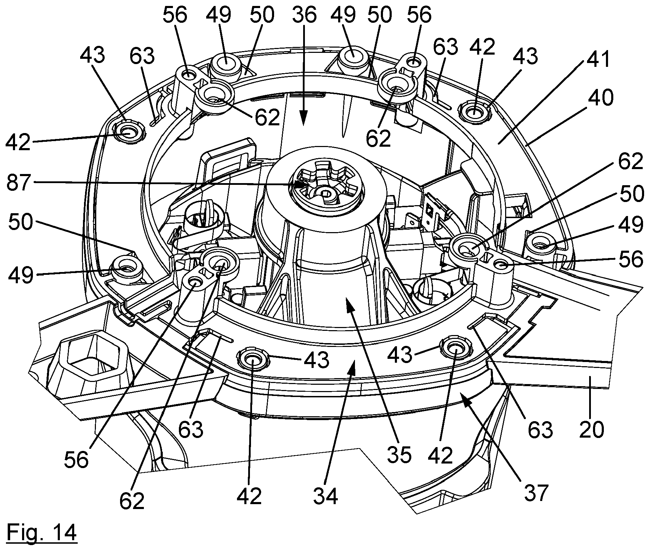

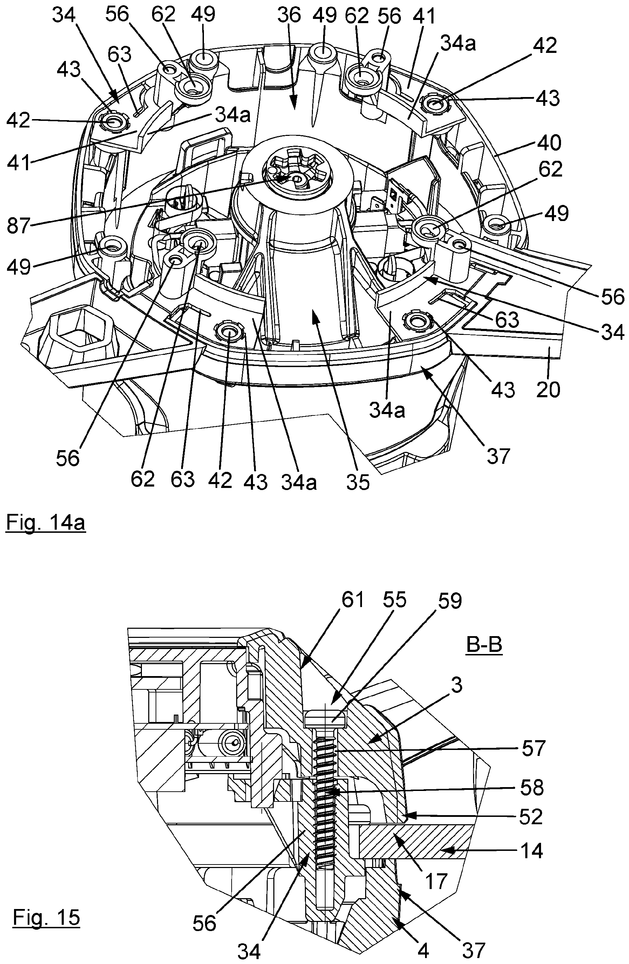

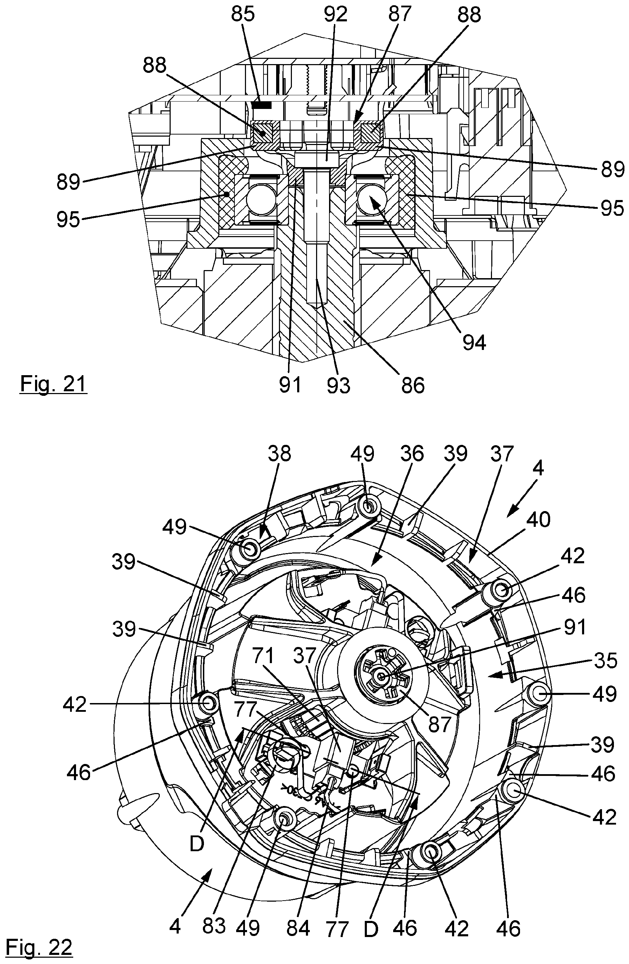

Wie dies insbesondere aus der Zusammenschau der Figuren 12 und 14 ersichtlich ist, ist das Ringelement 17 des Querbügels 14 unter Zwischenschaltung eines Anschluss- und/oder Isolationsrings 34 mit dem unteren Gehäuseteil 4 verbunden, wobei der Anschluss- und/oder Isolationsring 34 den Gehäuseinnenraum 35 ebenso wie das Ringelement 17 im hier gezeigten Beispielfall ringförmig umgibt und an einem die Gehäuseöffnung 36 des unteren Gehäuseteils 4 ausbildenden Öffnungsrandbereich 37 abgestützt und befestigt ist. Hierzu weist der Öffnungsrandbereich 37 des unteren Gehäuseteils 4, was insbesondere aus der Figur 22 ersichtlich ist, eine umfangsseitig umlaufende Abstütz- und Aufnahmefläche 38 auf, auf der der Anschluss- und/oder Isolationsring 34 aufliegt. Die Abstütz- und Aufnahmefläche 38 ist hierbei zum Teil durch am Öffnungsrandbereich 37 ausgebildete und umfangsseitig voneinander beabstandete Rippen 39 gebildet.

Gemäß einer hierzu alternativen Ausführungsform, die insbesondere aus der Zusammenschau der Figuren 12a und 14a ersichtlich ist, kann der Anschluss- und/oder Isolationsring 34 aber auch durch mehrere voneinander in Umfangsrichtung beabstandete Ringsegmente 34a gebildet sein.

Wie dies aus der Figur 22 weiter ersichtlich ist, ist die Abstütz- und Aufnahmefläche 38 gegenüber einer außenumfangsseitig umlaufenden Öffnungsrandkante 40 des Öffnungsrandbereichs 37 nach unten versetzt, und zwar hier beispielhaft um die Dicke bzw. Materialstärke des Anschluss- und/oder Isolationsrings 34 dergestalt nach unten versetzt, dass die Oberkante der Öffnungsrandkante 40 im montierten Zustand des Anschluss- und/oder Isolationsrings 34 im Wesentlichen oberflächenbündig zu einer Oberseite 41 (Figur 14 und Figur 14a) des Anschluss- und/oder Isolationsrings 34 liegt und diese zusammen eine im Wesentlichen ebene Auflagefläche für das Ringelement 17 des Querbügels 14 ausbilden.

Wie dies weiter aus der Figur 22 ersichtlich ist, weist die Abstütz- und Aufnahmefläche 38 mehrere voneinander in Umfangsrichtung des Öffnungsrandbereichs 37 beabstandete Schraubdome 42 mit einem Innengewinde auf, denen Durchschrauböffnungen 43 am Anschluss- und/oder Isolationsring 34 (siehe Figur 14) und Durchschrauböffnungen am Ringelement (siehe insbesondere Figuren 7 und 8) zugeordnet sind. Wie dies insbesondere aus der Figur 22 ersichtlich ist, ragen die Schraubdome 42 zapfenartig von der Abstütz- und Aufnahmefläche 38 ab und, wie dies nunmehr wiederum aus der Figur 14 ersichtlich ist, in die zugeordneten Durchschrauböffnungen 43 am Anschluss- und/oder Isolationsring 34 ein.

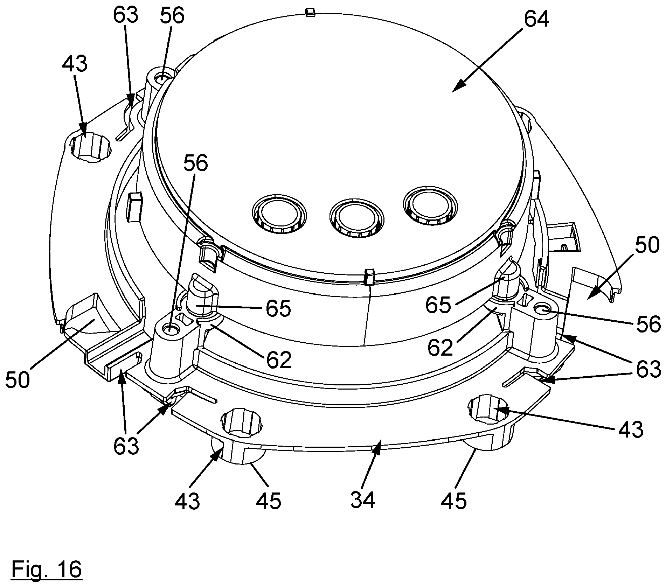

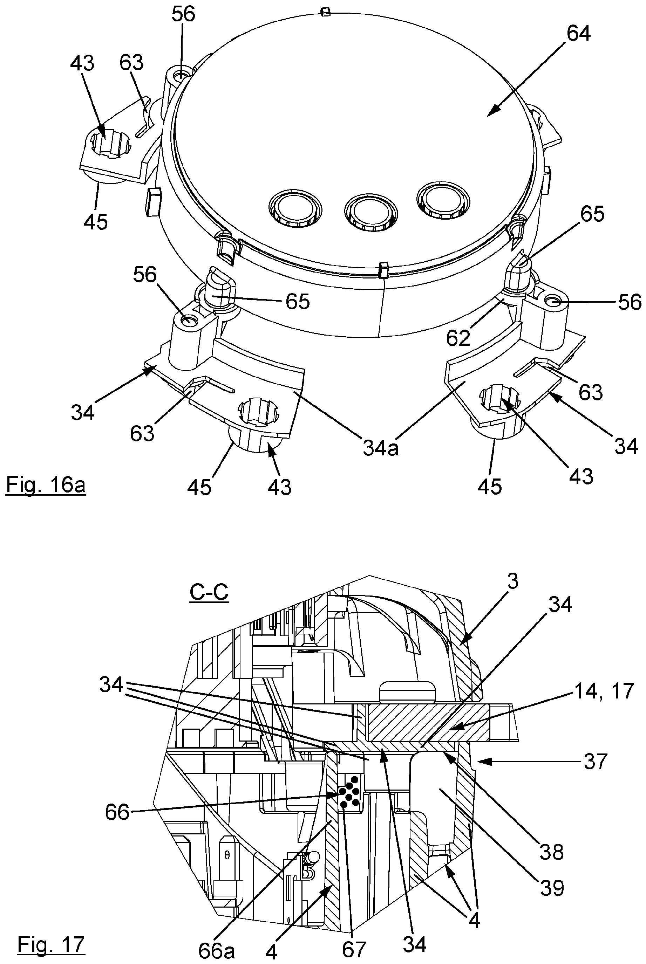

Wie dies insbesondere aus der Figur 16 ersichtlich ist, können die Durchschrauböffnungen 43 am Anschluss- und/oder Isolationsring 34 rohrstutzenartig ausgebildet sein und ein derartiges Übermaß gegenüber den Schraubdomen 42 der Abstütz- und Aufnahmefläche 38 aufweisen, dass sie sich im montierten Zustand mit ihrem freien endseitigen Stirnseitenbereich 45 unter Aufnahme des jeweiligen Schraubdoms 42 im Inneren der Durchschrauböffnung 43 um den jeweils zugeordneten Schraubdom 42 herum auf einem Abstützbereich 46 (siehe Figur 22) der Abstütz- und Aufnahmefläche 38 abstützen. Das gleiche gilt in analoger Weise für die in der Figur 16a gezeigte alternative Ausführungsform, bei der der Anschluss- und/oder Isolationsring 34 durch die Ringsegmente 34a ausgebildet ist.

Wie dies insbesondere aus der Figur 12 ersichtlich ist, werden zur Befestigung des Ringelementes 17 Befestigungsschrauben 47 von der Oberseite 48 des Ringelementes 17 her durch die Durchschrauböffnungen 43 am Anschluss- und/oder Isolationsring 34 sowie durch die Durchschrauböffnungen 44 am Ringelement 17 hindurch in die Schraubdome 42 eingeschraubt.

An dieser Stelle sei ausdrücklich nochmals erwähnt, dass in sämtlichen Ausführungsformen, in denen Bauteile, wie zum Beispiel die Schraubdome, mit einem Innengewinde versehen sind, dieses Innengewinde entweder bereits von vorne herein im Bauteil ausgebildet ist, oder durch Eindrehen der Befestigungsschraube im Bauteil erzeugt wird.

Wie dies weiter aus der Figur 22 ersichtlich ist, weist die Abstütz- und Aufnahmefläche 38 zudem mehrere voneinander in Umfangsrichtung des Öffnungsrandbereichs 37 beabstandete Zentrierzapfen 49 auf, denen Zentrieröffnungen 50 am Anschluss- und/oder Isolationsring 34 (siehe Figur 14 und Figur 16) und Zentrieröffnungen 51 am Ringelement 17 (siehe Figuren 7, 8 und 12) dergestalt zugeordnet sind, dass die Zentrierzapfen 49 so von der Abstütz- und Aufnahmefläche 38 abragen, dass sie durch die Zentrieröffnungen 50 am Anschluss- und/oder Isolationsring 34 hindurch von unten her in Richtung bzw. vorzugsweise sogar wenigstens bereichsweise in die zugeordneten Zentrieröffnungen 51 am Ringelement 17 einragen. Dies ist insbesondere gut aus der Figur 12 und der Schnittdarstellung der Figur 13 ersichtlich, die einen Schnitt entlang der Linie A-A der Figur 12 zeigt.

Für die alternative Ausführungsform eines durch mehrere voneinander beabstandete Ringsegmente 34a gebildeten Anschluss- und/oder Isolationsrings 34 (Figuren 12a, 14a und 16a) können zwar durch eine entsprechende Segmentausgestaltung grundsätzlich auch den Zentrierzapfen 49 zugeordneten Zentrieröffnungen 50 an den Ringsegmenten 34a vorgesehen werden. In der hier gezeigten bevorzugten Ausführungsform (Figuren 12a, 14a und 16a) sind die Ringsegmente 34a jedoch so gestaltet, dass keine den Zentrierzapfen 49 zugeordneten Zentrieröffnungen 50 vorgesehen sind bzw. benötigt werden. Bei dieser Ausführungsvariante (siehe insbesondere Figur 12a) sind dann den mehreren voneinander in Umfangsrichtung des Öffnungsrandbereichs 37 beabstandeten Zentrierzapfen 49 der Abstütz- und Aufnahmefläche 38 lediglich die Zentrieröffnungen 51 am Ringelement 17 dergestalt zugeordnet, dass die Zentrierzapfen 49 so von der Abstütz- und Aufnahmefläche 38 abragen, dass sie von unten her in Richtung der zugeordneten Zentrieröffnungen 51 am Ringelement 17 ragen bzw. gegebenenfalls zumindest bereichsweise in die zugeordneten Zentrieröffnungen 51 am Ringelement 17 einragen.

Aus der Figur 13 ist weiter ersichtlich, dass der Gehäusedeckel 3 im montierten Zustand mit einem umfangsseitigen Randbereich 52 (siehe hierzu auch die Figuren 1 bis 3) auf dem Ringelement 17 aufliegt und abgestützt ist, wobei der Gehäusedeckel 3 an seiner Unterseite den Zentrieröffnungen 51 des Ringelementes 17 zugeordnete Zentrierzapfen 53 (siehe Figur 13) aufweist, die im montierten Zustand des Gehäusedeckels 3 ebenfalls bereichsweise von oben her in die zugeordneten Zentrieröffnungen 61 am Ringelement 17 einragen, vorzugsweise dergestalt, wie in der Figur 13 dargestellt, dass die freien Enden der gehäusedeckelseitigen Zentrierzapfen 53 einen Spaltabstand zu den abstütz- und aufnahmeflächenseitigen Zentrierzapfen 49 aufweisen.

Ersichtlich gelingt daher mit den Zentrieröffnungen 51 am Ringelement auch eine funktionssichere Ausrichtung und Anordnung des Gehäusedeckels 3 auf dem Ringelement 17, wobei das Ringelement 17 im montierten Zustand mit einem ebenen Auflageflächenbereich 54 (siehe insbesondere die Figuren 7 und 8) in einer flächigen Anlageverbindung auf der dem Ringelement zugewandten, ebenfalls ebenen Oberseite 41 des Anschluss- und/oder Isolationsrings 34 aufliegt. Zudem gelingt, insbesondere in Verbindung mit einem Falltest, eine vorteilhafte Krafteinleitung über den Deckel und das Ringelement in das untere Gehäuseteil.

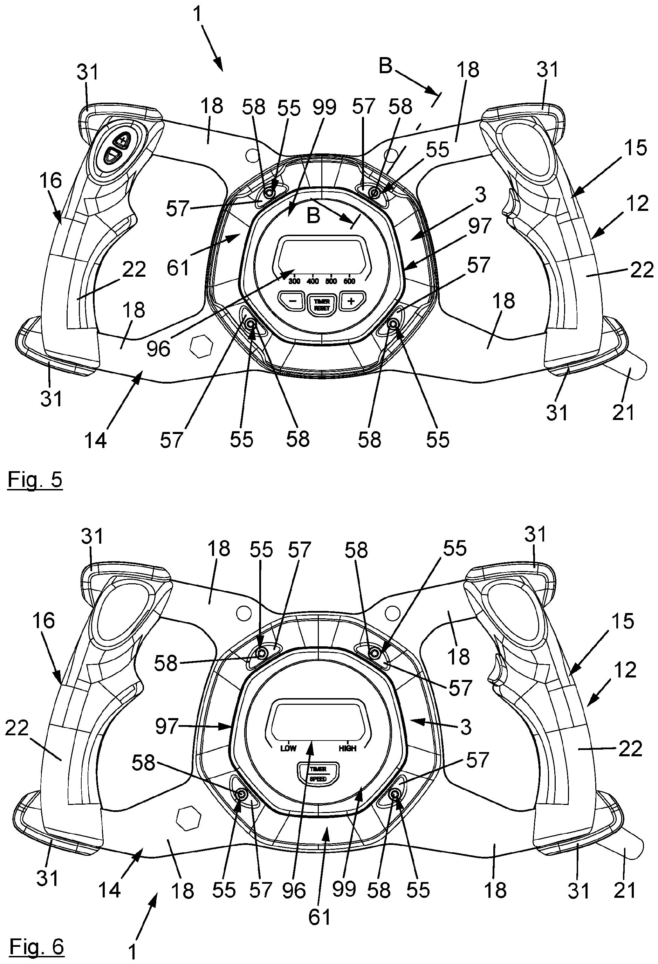

Wie dies weiter insbesondere aus der Zusammenschau der Figuren 5 und 6 sowie der Figur 15 ersichtlich ist, ist der Gehäusedeckel 3, unter abstützender Auflage seines umfangsseitigen Randbereichs 52 auf dem Ringelement 17, mit dem Anschluss- und/oder Isolationsring 34 mittels mehrerer Schraubverbindungen 55 lösbar verschraubt. Hierzu weist der Anschluss- und/oder Isolationsring 34, wie dies gut aus der Figur 14 ersichtlich ist, mehrere voneinander in Umfangsrichtung des Öffnungsrandbereichs 37 beabstandete Einschraubelemente 56 auf, die hier durch von dem Anschluss- und/oder Isolationsring 34 in Richtung Gehäusedeckel 3 abragende zapfenartige Schraubdome mit einem Innengewinde gebildet sind. Den Einschraubelementen 56 sind am Gehäusedeckel 3 ausgebildete und in Umfangsrichtung voneinander beabstandete, deckelseitige Durchschrauböffnungen 57 dergestalt zugeordnet, dass zur Herstellung der Schraubverbindung eine Befestigungsschraube 58 von der Deckelaußenseite durch die jeweilige Durchschrauböffnung 57 in das zugeordnete Einschraubelement einschraubbar ist, wobei sich jede Befestigungsschraube 58 mit ihrem Schraubenkopf 59 an einem Öffnungsrandbereich der zugeordneten Durchschrauböffnung 57 abstützt (siehe insbesondere Figur 15).

Wie dies insbesondere aus der Figur 12 ersichtlich ist, sind den als zapfenartige Schraubdome ausgebildeten Einschraubelementen 56, hier beispielhaft randseitige, Domausnehmungen 60 im Ringelement 17 zugeordnet, wobei die als Schraubdome ausgebildeten Einschraubelemente 56 im hier gezeigten Beispielfall die randseitigen Domausnehmungen 60 dergestalt durchgreifen, dass sie das Ringelement 17 auf der dem Gehäusedeckel 3 zugewandten Oberseite 48 überragen.

Wie dies insbesondere auch aus den Figuren 1 bis 3 ersichtlich ist, ist der Gehäusedeckel 3 hier bevorzugt als ein kuppelartig gewölbter Gehäusedeckel ausgebildet, der einen in Umfangsrichtung umlaufenden seitlichen Wandbereich 61 aufweist, in dem die deckelseitigen Durchschrauböffnungen 57 voneinander beabstandet ausgebildet sind. Wie dies insbesondere aus der einen Schnitt entlang der Linie B-B der Figuren 5 und 6 zeigenden Figur 15 ersichtlich ist, sind die deckelseitigen Durchschrauböffnungen 57 hier durch von der Unterseite des seitlichen Wandbereichs 61 abragende zapfenartige Rohrstutzen gebildet, die im montierten Zustand mit den hier durch Schraubdome ausgebildeten Einschraubelementen 56 fluchten und unmittelbar an diese angrenzen, vorzugsweise an diesen anliegen oder, wie in der Figur 15 dargestellt, mit einem minimalen Spaltabstand an diese angrenzen.

Wie dies insbesondere aus den Figuren 1 bis 3 sowie den Figuren 5 und 6 ersichtlich ist, liegt der Gehäusedeckel 3 im montierten Zustand dergestalt auf dem Ringelement 17 des Querbügels 14 auf, dass er im Wesentlichen der Außenumfangskontur des Ringelementes 17 folgt und dass die Befestigungsschrauben 47 zur Festlegung des Ringelementes 17 an dem Öffnungsrandbereich 37 bzw. am unteren Gehäuseteil 4 im Inneren des Gehäusedeckels 3 liegen.

Wie dies insbesondere aus den Figuren 12 und 14 ersichtlich ist, sind die hier durch Schraubdome gebildeten Einschraubelemente 56 materialeinheitlich und einstückig mit Halteelementen 62 verbunden, die sich in Radialrichtung gesehen unmittelbar an die Einschraubelemente 56 anschließen und hier beispielhaft durch Halteringe mit einer Ringöffnung ausgebildet sind. Dementsprechend ragen die Halteelemente 62 vom Öffnungsrandbereich 37 weg in die Gehäuseöffnung 36 des unteren Gehäuseteils 4 ein.

Wie dies insbesondere aus den Figuren 14 und 16 gut ersichtlich ist, sind die miteinander kombinierten Halteelemente 62 und Einschraubelemente 56 elastisch rückfedernd am Anschluss- und/oder Isolationsring 34 angebunden, und zwar mit Hilfe eines Freischnitts 63, der bewirkt, dass der Bauteilverbund aus jeweils Einschraubelement 56 mitsamt Halteelement 62 bereichsweise freihängend am Anschluss- und/oder Isolationsring 34 angebunden ist.

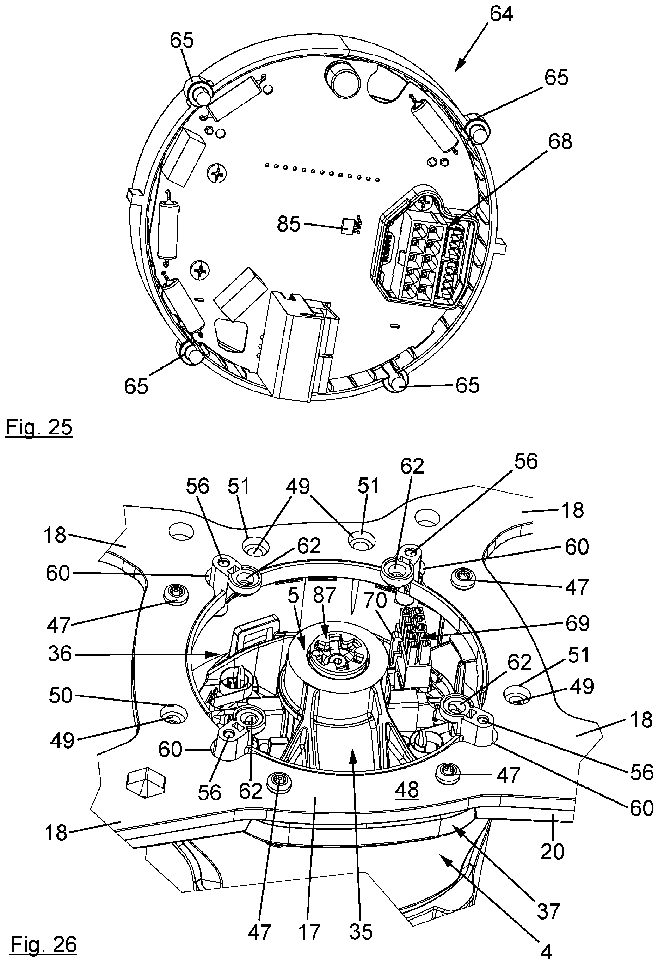

Die Halteelemente 62 bilden konkret eine Halteeinrichtung für ein Elektronikmodul 64 aus, das in der Figur 25 in einer perspektivischen Unteransicht gezeigt ist. An der in der Figur 25 gezeigten Unterseite des Elektronikmoduls 64 sind außenumfangsseitig voneinander beabstandete Haltezapfen 65 als Haltegegenelement angeordnet, die im montierten Zustand (siehe Figur 16) in die durch die Halteringe gebildeten Halteelemente 62 eingreifen, so dass das Elektronikmodul 64 ebenfalls am Anschluss- und/oder Isolationsring 34 abgestützt und gehaltert ist.

Wie dies weiter aus der Figur 12 und insbesondere aus der Figur 17, die einen Schnitt entlang der Linie C-C der Figur 12 zeigt, ersichtlich ist, bildet der Anschluss- und/oder Isolationsring 34, hier beispielhaft auf seiner dem Ringelement 17 abgewandten Unterseite, im Zusammenwirken mit einer Distanzhalterwand 66a des unteren Gehäuseteils 4 einen Distanzhalter 66 aus, mit dem elektrische Leitungen 67 auf Abstand zu insbesondere dem Ringelement 17 gehalten werden. Der aus einem elektrisch nicht-leitenden Material, vorzugsweise aus Kunststoff, hergestellte Anschluss- und/oder Isolationsring 34 schirmt damit, wie dies aus der Figur 17 gut ersichtlich ist, die elektrischen Leitungen 67 von dem vorzugsweise aus Stahl bzw. aus Metall gebildeten Ringelement 17 bzw. Querbügel 14 ab und bündelt die elektrischen Leitungen 67 zudem in einem wandnahen Bereich des unteren Gehäuseteils 4, so dass diese von dort aus mit kurzen Leitungslängen zu den elektronischen Bauteilen geführt werden können.

Wie dies weiter aus der Zusammenschau der Figuren 25 und 26 ersichtlich ist, weist das Elektronikmodul 64 auf seiner in der Figur 25 gezeigten Unterseite einen Steckanschluss 68 für einen Steckverbinder 69 einer hier nicht im Detail dargestellten Kabelverbindung, beispielsweise einen Kabelbaum, auf, mittels der die elektronischen Komponenten der Baumischmaschine 1 mit dem Elektronikmodul 64 und damit auch mit der Bestandteil des Elektronikmoduls 64 bildenden Steuereinrichtung elektrisch verbindbar sind.

Der Steckverbinder 69 ist hier im Gehäuseinnenraum 35 im Bereich des unteren Gehäuseteils 4 angeordnet (Figur 26), vorzugsweise dort mittels einer beispielsweise als Schnappverbindung ausgebildeten Rastverbindung 70 lösbar gehaltert.

Der Steckeranschluss 68 am Elektronikmodul 64 bzw. der Steckverbinder 69 im unteren Gehäuseteil 4 sind so angeordnet und ausgebildet, dass die Steckverbindung zwischen den beiden Bauteilen im in der Figur 16 gezeigten montierten Zustand des Elektronikmoduls 64 hergestellt ist.

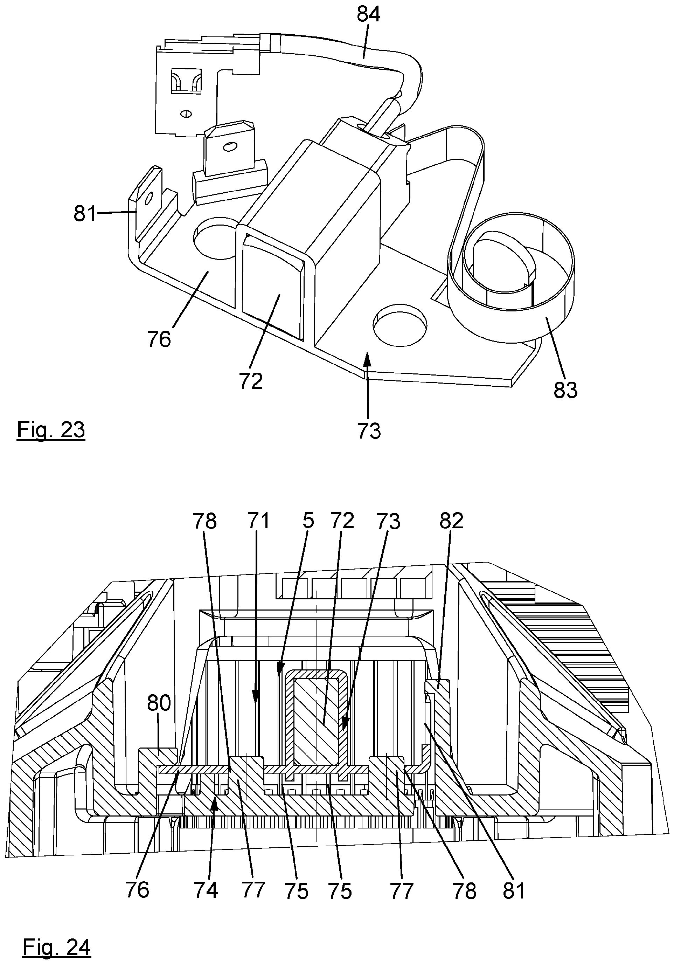

Wie dies aus der Zusammenschau der Figuren 22 bis 24 weiter ersichtlich ist, weist der als Elektromotor, vorzugsweise als bürstenbehafteter Elektromotor, ausbildete Antriebsmotor 5 einen Stator (nicht ersichtlich) und einen Rotor 71 (siehe insbesondere Figur 24) auf, wobei der Rotor 71 bzw. bevorzugt ein Kommutator des Rotors 71 in Kontakt mit einer Kohlebürste 72 steht, die von einem Kohlehalter 73 gehalten wird.

Dieser Kohlehalter 73 ist, was insbesondere gut aus der Figur 24 ersichtlich ist, mit einem Spaltabstand auf einer Montagefläche 74 im Bereich des unteren Gehäuseteils 4 lösbar angeordnet, wobei die Montagefläche 74 hier durch mehrere voneinander beabstandete Auflagerippen 75 gebildet ist, auf denen der Kohlehalter 73 mit einer durch eine Basisplatte 76 gebildeten Auflagefläche aufliegt. Die Montagefläche 74 weist des Weiteren zwei voneinander beabstandete Zentrierzapfen 77 auf, denen Zentrierausnehmungen 78 am Kohlehalter 73 bzw. im hier gezeigten Beispielfall der Basisplatte 76 zugeordnet sind. In dem in der Figur 24 gezeigten montierten Zustand, greifen die Zentrierzapfen 77 form- und konturangepasst in die Zentrierausnehmungen 78 ein, so dass der Kohlehalter 73 mitsamt seiner Kohlebürste lage- und positionsgenau angeordnet ist.

Zur lösbaren Halterung des Kohlehalters 73 bzw. dessen Basisplatte 76 an der Montagefläche 74 ist eine lösbare Rastverbindung 79 vorgesehen. Konkret ist die Rastverbindung 79 hier durch eine Einhak- und Schnappverbindung gebildet, bei der zunächst ein in der Bildebene der Figur 24 linker Bereich der Basisplatte 76 unter ein Einhakelement 80 gefädelt wird, dann der Kohlehalter 73 nach unten in Richtung Montagefläche 74 geschwenkt wird, bis ein in der Bildebene der Figur 24 rechtes Schnappelement 81 in der in der Figur 24 gezeigten endmontierten Stellung unter ein Einhakelement 82 schnappt und dort lösbar verriegelt ist.

Wie dies insbesondere aus der Zusammenschau der Figuren 22 und 23 ersichtlich ist, weist der Kohlehalter 73 ferner ein Federelement 83 auf, das hier als Spiralfeder ausgebildet ist und die Kohlebürste 72 in Richtung Rotor 71 drückt bzw. presst, damit diese funktionssicher am Rotor 71 bzw. am Kommutator des Rotors 71 anliegt. Über eine elektrische Leitung 84 wird beispielsweise der elektrische Strom zu der Kohlebürste 72 übertragen, von der der Strom dann auf beispielsweise den Kommutator des Elektromotors übertragen wird, um den Rotor 71 mit Strom zu versorgen und ihn in Bewegung zu setzen.

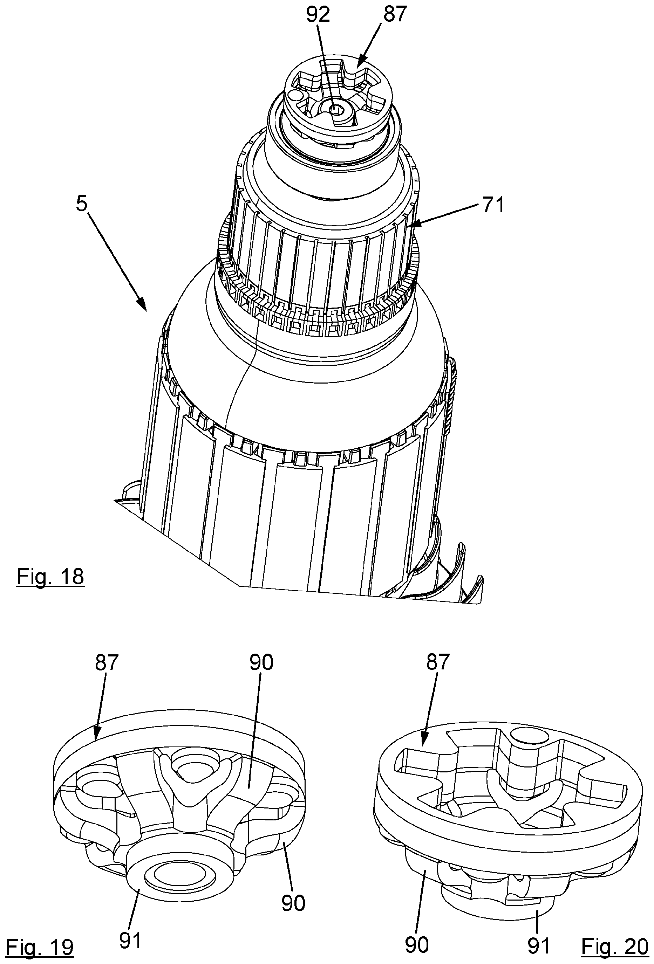

Wie dies weiter aus der Zusammenschau der Figuren 18 bis 21 sowie der Figuren 25 und 26 ersichtlich ist, weist das Elektronikmodul 64 auf seiner Unterseite ferner eine mit der Steuereinrichtung des Elektronikmoduls 64 gekoppelte Sensoreinrichtung 85 auf, die hier durch einen magnetoresistiven Sensor bzw. einen Hallsensor gebildet ist. Der Antriebsmotor 5 weist weiter ein mit der Rotorwelle 86 (siehe insbesondere Figur 21) gekoppeltes Indikatorelement auf, das hier durch einen Magnetring 87 gebildet ist, der mit dem freien Ende der Rotorwelle 86 verbunden ist. Der Magnetring 87 weist eine Mehrzahl von in Umfangsrichtung beabstandeten Magnetelementen 88 auf, die beispielsweise durch Permanentmagnete gebildet sind, die in Taschen 89 des Magnetrings 87 aufgenommen sind.

Wie dies insbesondere aus den Figuren 19 und 20 ersichtlich ist, ist der Magnetring 87 mittels mehrerer in Umfangsrichtung beabstandeter Haltearme 90 an dem freien Ende der Rotorwelle 86 abgestützt, wozu die Haltearme 90, die vorzugsweise wenigstens bereichsweise aus einem elastischen Material hergestellt sind, mit ihrem dem Magnetring 87 abgewandten Ende an einer Stützscheibe 91 angeordnet sind, die mit dem freien Ende der Rotorwelle 86 mittels einer Schraubverbindung 92 verbunden ist.

Wie dies insbesondere aus der Figur 21 gut ersichtlich ist, ist die Sensoreinrichtung 85 hier bevorzugt exzentrisch mit Bezug zur Drehachse 93 des Magnetrings 87 bzw. im hier gezeigten Beispielfall der Rotorwelle 86 angeordnet.

Mittels der Sensoreinrichtung 85 kann die Position der Magnetelemente 88 des Magnetrings 87 erfasst und ein entsprechenden Signal an die Steuereinrichtung übermittelt werden, beispielsweise zur Bestimmung der Drehzahl und/oder des Drehmomentes des Antriebsmotors 5.

Wie dies aus der Figur 21 weiter ersichtlich ist, ist die Rotorwelle 86 wenigstens auf der dem Magnetring 87 zugewandten Seite in einem Wälzlager 94 drehbar gelagert, dessen äußerer Lagerring 95 hier beispielhaft aus einem Elastomermaterial hergestellt ist.

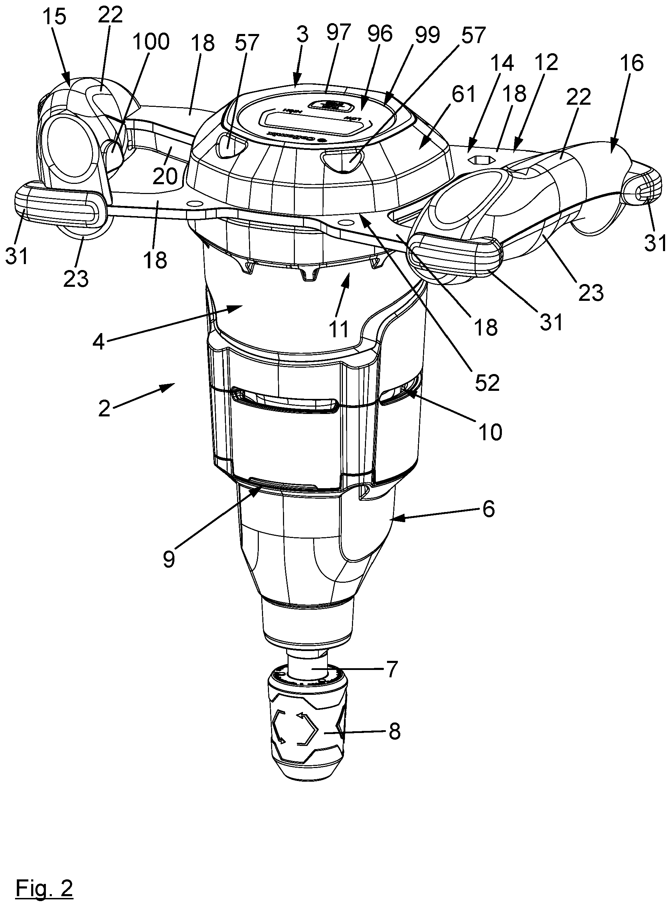

Wie dies insbesondere den Figuren 2 und 3 sowie den Figuren 5 und 6 zu entnehmen ist, weist das Elektronikmodul 64 auf seiner Oberseite eine Anzeige- und/oder Bedieneinrichtung 96 auf, mittels der im hier gezeigten Beispielfall ein Betriebszustand des Antriebsmotors 5 anzeigbar und auch ein Betriebsmodus des Antriebsmotors 5 eingebbar ist. Hierfür ist die Anzeige- und/oder Bedieneinrichtung 96 über einen durch eine Ausnehmung 97 im Gehäusedeckel 3 gebildeten Zugangsbereich frei zugänglich.

Wie dies aus den Figuren 2 und 3 sowie den Figuren 5 und 6 ersichtlich ist, verschließt die die Anzeige- und/oder Bedieneinrichtung 96 aufweisende Sichtseite 98 des Elektronikmoduls 64 die Ausnehmung 97 im montierten Zustand dicht und bildet dementsprechend einen Bestandteil der Oberseite 99 des Gehäusedeckels 3.

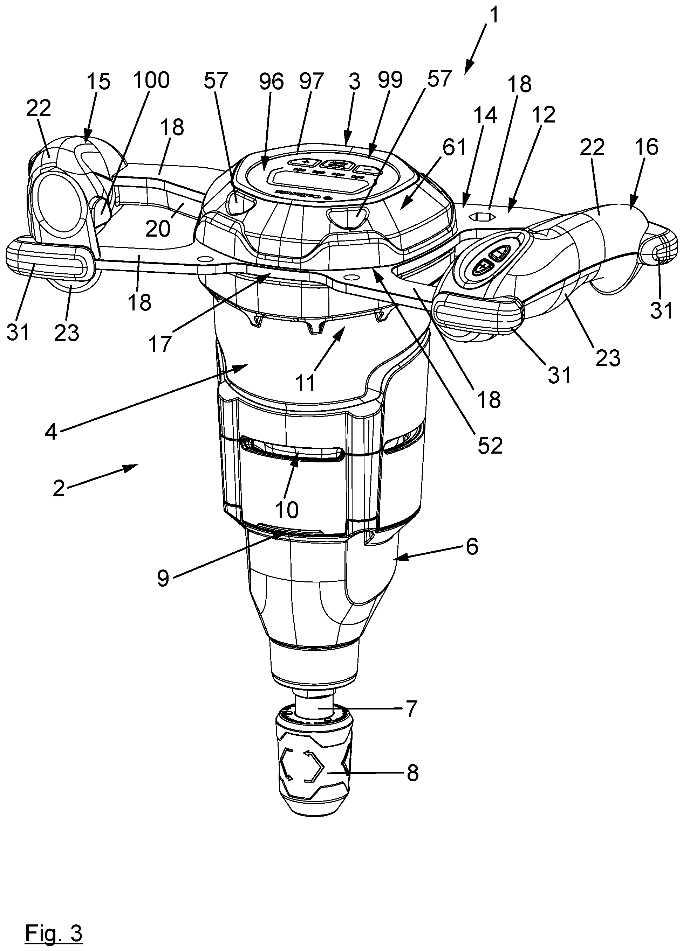

Wie dies aus den Figuren 2, 3 sowie aus den Figuren 5 und 6 gut ersichtlich ist, zeigt die Figur 5 die Draufsicht auf die Ausführungsform gemäß Figur 3 und die Figur 6 die Draufsicht auf die Ausführungsform gemäß Figur 2. Den beiden Ausführungsformen der Figuren 2 und 3 ist gemeinsam, dass hier das die Steuereinrichtung aufweisende Elektronikmodul 64 im Gehäuseinnenraum 35 im Bereich des Gehäusedeckels 3 und damit, bezogen auf die Gebrauchsposition der Baumischmaschine 1, oberhalb des Antriebsmotors 5 angeordnet sowie mit dem Antriebsmotor 5 elektrisch verbunden ist.

Die hier beispielhaft durch einen Handschalter gebildete Betätigungseinrichtung 13 ist über eine Kabelverbindung mit dem Elektronikmodul 64 und damit mit der Bestandteil des Elektronikmoduls 64 bildenden Steuereinrichtung gekoppelt, so dass bei einer Betätigung der Betätigungseinrichtung 13 der Antriebsmotor 5 von der, Bestandteil des Elektronikmoduls 64 bildenden Steuereinrichtung elektronisch angesteuert wird.

Wie dies insbesondere aus der Figur 4 ersichtlich ist, kann die Betätigungseinrichtung 13 ferner mit einem Einschaltverriegelungselement 100 gekoppelt sein, das die Betätigungseinrichtung 13 lösbar verriegelt und für eine Freigabe der Betätigung der Betätigungseinrichtung 13 zusätzlich zu dieser gedrückt werden muss.

Wie dies aus der Zusammenschau der jeweils die gleiche Anzeige- und/oder Bedieneinrichtung 96 zeigenden Figuren 5, 28, 29 und 30 ersichtlich ist, weist die Anzeige- und/oder Bedieneinrichtung 96 hier mehrere Eingabetasten 101, 102, 103 als Interaktionselemente auf, die hier leidglich beispielhaft durch eine physische Eingabetaste ausgebildet sind und mittels denen die Drehzahl (Eingabetaste 101 und Eingabetaste 102) eingestellt bzw. vorgegeben werden kann. Wie in den Figuren 5, 28, 29 und 30 dargestellt, kann durch die Eingabetaste 101 die Drehzahl reduziert und durch die Eingabetaste 102 die Drehzahl erhöht werden.

Den eben genannten Figuren ist weiter zu entnehmen, dass die Anzeige- und/oder Bedieneinrichtung 96 ein Display 104 aufweist, auf dem im vorliegenden Fall zum einen die eingestellte Drehzahl als Balkendiagramm 105 und zum anderen die Mischzeit durch eine Zeitanzeige 106 angezeigt wird.

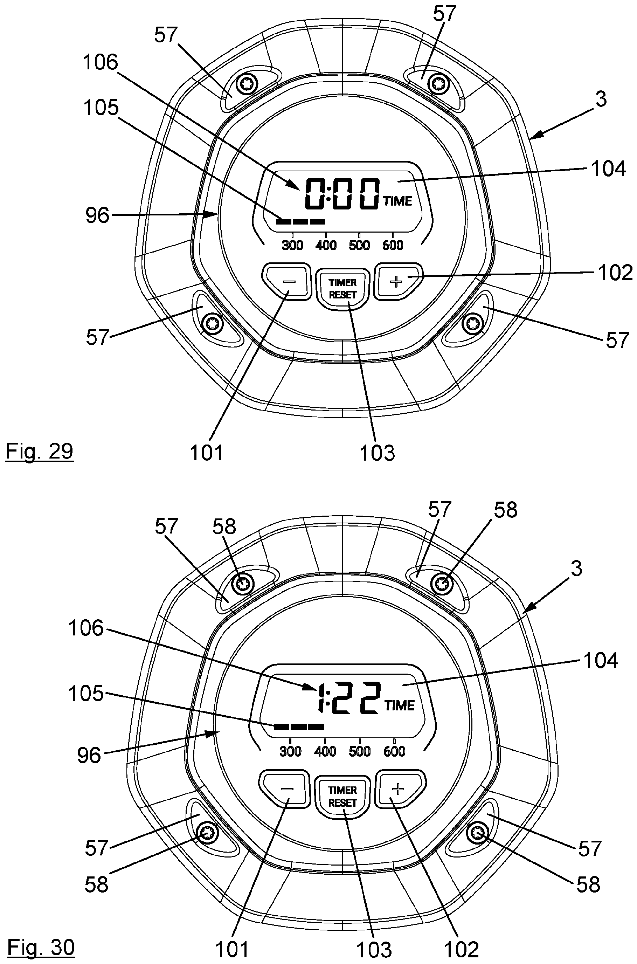

Wie dies dem Balkendiagramm 105 der Figuren 29 und 30 zu entnehmen ist, ist hier beispielhaft die Drehzahl auf 400 U/min eingestellt worden.

Die als "Timer Reset" bezeichnete Eingabetaste 103 ermöglicht es dem Bediener beispielsweise, die Zeitanzeige 106 zu Beginn eines Mischvorgangs auf Null zu setzen, so dass die Mischzeit bei einer Betätigung der Baumischmaschine 1 mittels der Betätigungseinrichtung 13 von Null weg (siehe Figur 29) gezählt wird. In der Figur 30 ist hier die Mischzeit beispielhaft mit 1 Minute und 22 Sekunden angezeigt.

Im hier gezeigten Beispielfall der Figuren 5, 28, 29 und 30 wird die Mischzeit mittels der Zeitanzeige 106 lediglich informativ angezeigt, das heißt, dass nach Ablauf einer bestimmten Mischzeit keine Deaktivierung des Antriebsmotors 5 erfolgt, auch wenn die Steuereinrichtung grundsätzlich mit einer derartigen Funktion programmierbar bzw. belegbar wäre.

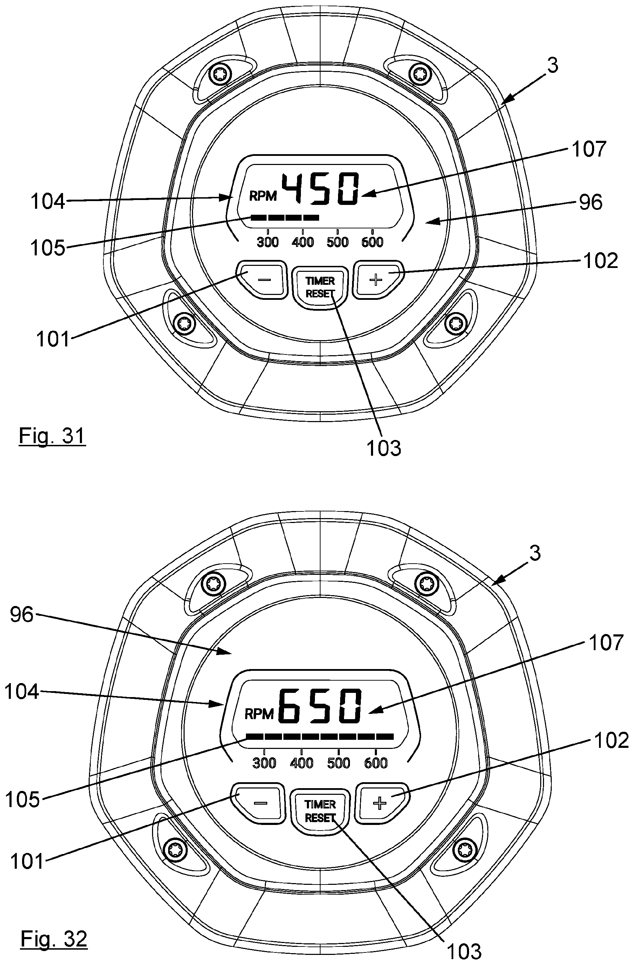

Die in den Figuren 31 und 32 dargestellte Anzeige- und/oder Bedieneinrichtung 96 entspricht derjenigen der Figuren 29 und 30, jedoch mit dem Unterschied, dass hier anstelle der Mischzeit nunmehr die Drehzahl als Drehzahlanzeige 107 im Display 104 angezeigt wird. Dies kann vom Bediener beispielsweise dadurch bewirkt werden, dass zweimal auf die Eingabetaste 103 gedrückt wird oder die Eingabetasten 101 bzw. 102 zur Veränderung der Drehzahl gedrückt werden.

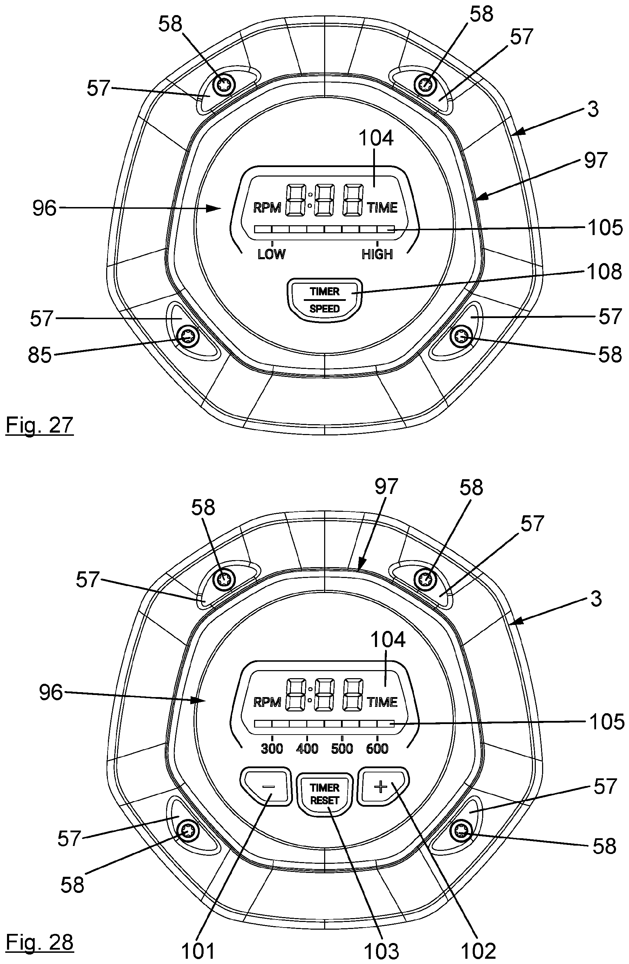

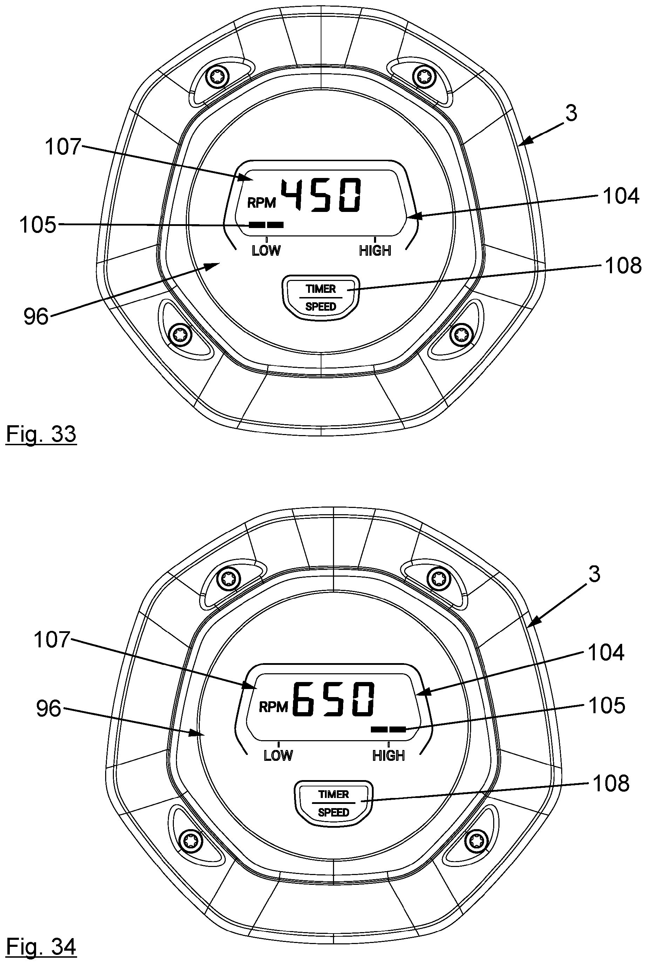

In der Figur 27 sowie in den Figuren 33 und 34 ist eine alternative beispielhafte Ausführungsform einer Anzeige- und/oder Bedieneinrichtung 96 gezeigt, die derjenigen der Figur 2 entspricht und bei der lediglich eine einzige Eingabetaste 108 als Interaktionselement vorgesehen ist. Bei dieser Ausführungsform kann, wie dies insbesondere aus den Figuren 33 und 34 ersichtlich ist, auf dem Display 104 eine Drehzahlanzeige 107 sowie ein Balkendiagramm 105 angezeigt werden. Die Eingabetaste 108 kann beispielsweise Die Eingabetaste 108 kann beispielsweise mit zwei Funktionen versehen werden, beispielsweise dergestalt, dass bei einmaligem Drücken die Drehzahl eingestellt bzw. auf die Drehzahl umgestellt wird, während bei einem kurzzeitig gehaltenem Drücken dann die Zeitanzeige auf null gesetzt wird. Die Zeitanzeige an sich erscheint sobald der Antriebsmotor betrieben wird und/oder die Betätigungseinrichtung betätigt wird.

Wie dies insbesondere auch den Figuren 5 und 6 entnommen werden kann, unterscheiden sich die beiden Ausführungsformen der Figuren 2 und 3 hier ferner auch dadurch, dass bei der Ausführungsform der Figuren 3 und 5 an dem Handgriff 16 zwei Eingabetasten 109, 110 als Interaktionselemente auf einer Oberseite des Handgriffs 16 angeordnet sind, so dass die beiden Eingabetasten 109, 110 von einem Bediener bequem mittels beispielsweise des Daumens betätigbar sind.

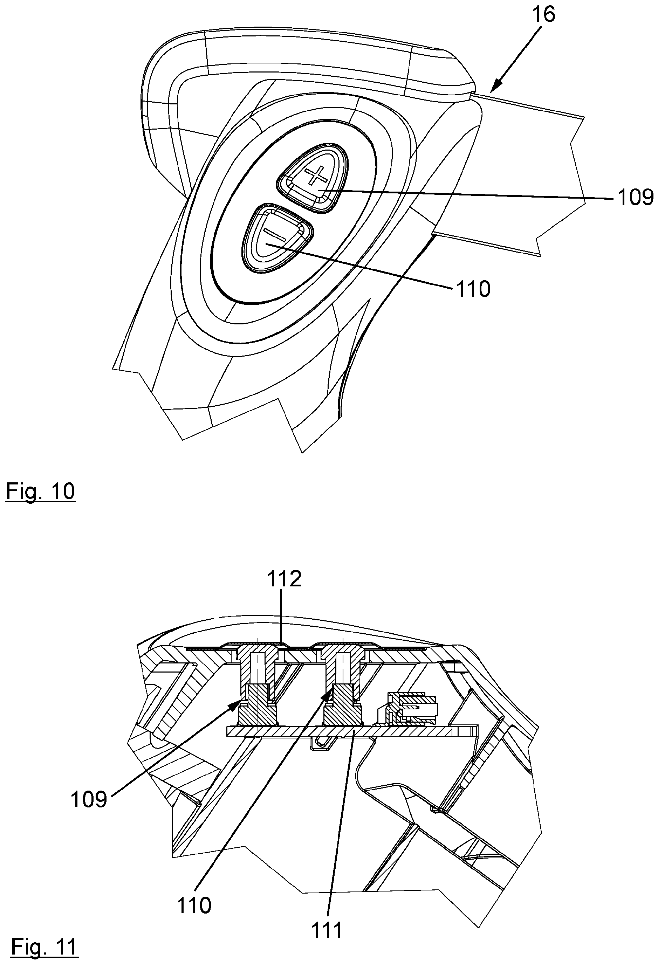

Wie dies insbesondere auch den Figuren 10 und 11 zu entnehmen ist, dient hier eine erste Eingabetaste 109 beispielsweise der Drehzahlerhöhung, während die zweite Eingabetaste 110 der Drehzahlreduzierung dient. Die beiden Eingabetasten 109, 110 sind hier, wie dies beispielhaft aus der Figur 11 ersichtlich ist, die einen Schnitt durch den Handgriffbereich der Figur 10 zeigt, durch Tastenstößel gebildet, die auf ihrer Oberseite von der Tastenfolie 112 abgedeckt sind, so dass die beiden Eingabetasten 109, 110 über diese Tastenfolie 112 betätigbar sind.

Die beiden Eingabetasten 109, 110 sind hier auf einer Platine 111 angeordnet, auf der ferner ein Steckanschluss bzw. Anschlusstecker 113 angeordnet ist, der hier mittels einer nicht dargestellten Kabelverbindung, analog zur Betätigungseinrichtung 13, über den Handgriff 16 und über eine der Querstreben 18 des Querbügels 14, nach außen hin abgekapselt mittels einer querstrebenseitig angeordneten Schutzschale, zum Gehäuse 2 und weiter zum Elektronikmodul 64 geführt ist.

Besonders bevorzugt ist hierbei eine Ausführungsform, bei der sämtliche elektrischen Leitungen, die vom Antriebsmotor 5, von der Betätigungseinrichtung 13 sowie von den Eingabetasten 109, 110 kommen zu einem Kabelbaum gebündelt werden und, wie in der Figur 26 lediglich äußerst schematisch gezeigt, mit einem Steckverbinder 69 versehen werden, der mit dem Steckanschluss 68 des Elektronikmoduls 64 elektrisch verbunden wird.

Die beiden Ausführungsformen der Figuren 2 und 3 weisen somit, wie vorstehend beschrieben, jeweils ein Elektronikmodul 64 im Bereich des Gehäusedeckels 3 auf. Dies ist bei der in der Figur 1 lediglich äußerst schematisch dargestellten vereinfachten Ausführungsform der erfindungsgemäßen Baumischmaschine nicht der Fall. Hier ist somit der Anschluss- und/oder Isolationsring 34 mit keinem Elektronikmodul 64 versehen und der Gehäusedeckel 3 weist keine Ausnehmung 97 auf. Stattdessen ist der Gehäusedeckel 3 hier mit einer durchgehenden Oberseite 114 ausgestattet. Die Steuereinrichtung ist hier bevorzugt, aber nicht zwingend, in dem Handgriff 15 angeordnet und dergestalt mit der Betätigungseinrichtung 13 gekoppelt, dass die Drehzahl der Baumischmaschine 1 in Abhängigkeit von dem Betätigungsweg der Betätigungseinrichtung 13 beim zum Beispiel Drücken durch den Bediener eingestellt wird. Ansonsten ist auch der Aufbau der Ausführungsform der Figur 1 identisch mit derjenigen, wie sie zuvor in Verbindung mit den Figuren 2 und 3 beispielhaft näher erläutert worden ist.

Die Erfindung wurde vorliegend in Verbindung mit der Figurenbeschreibung lediglich beispielhaft beschrieben. Abwandlungen und Ausgestaltungen hierzu, die im Griffbereich eines Durchschnittsfachmanns liegen, sind selbstverständlich vom Schutzumfang des vorliegenden Erfindungsgegenstandes mit umfasst. Dies betrifft insbesondere zum Beispiel die Ausstattung einer erfindungsgemäßen handbetätigten Baumischmaschine mit mehreren Anschlüssen für ein Misch- und/oder Rührwerkzeug, beispielsweise für Rührstäbe, so dass zum Beispiel mehrere derartiger Rührstäbe gleich- und/oder gegensinnig drehangetrieben werden können.

### Bezugszeichenliste

- 1: Baumischmaschine
- 2: Gehäuse
- 3: Gehäusedeckel
- 4: unteres Gehäuseteil
- 5: Antriebsmotor
- 6: Getriebe
- 7: Antriebswelle
- 8: Anschlusselement
- 9: Luftschlitz
- 10: Luftschlitz
- 11: Luftschlitz
- 12: Handgriffeinrichtung
- 13: Betätigungseinrichtung/Handschalter
- 14: Querbügel/Griffbügel
- 15: Handgriff
- 16: Handgriff
- 17: Ringelement
- 18: Querstrebe
- 19: Hohl- und/oder Aufnahmeraum
- 20: Schutzschale
- 21: Netzkabel
- 22: obere Griffschale
- 23: untere Griffschale
- 24: Positionsloch
- 25: Positionsloch
- 26: Schraubdom
- 27: Durchschrauböffnung
- 28: Befestigungsschraube
- 29: Ausnehmung
- 30: Schraubkopf
- 31: Pufferelement
- 32: Rastelement
- 33: Rastgegenelement
- 34: Anschluss- und/oder Isolationsring
- 34a: Ringsegmente
- 35: Gehäuseinnenraum
- 36: Gehäuseöffnung
- 37: Öffnungsrandbereich
- 38: Abstütz- und Aufnahmefläche
- 39: Rippe
- 40: Öffnungsrandkante
- 41: Oberseite
- 42: Schraubdom
- 43: Durchschrauböffnung
- 44: Durchschrauböffnung
- 45: Stirnseitenbereich
- 46: Abstützbereich
- 47: Befestigungsschraube
- 48: Oberseite
- 49: Zentrierzapfen
- 50: Zentrieröffnung
- 51: Zentrieröffnung
- 52: umfangsseitiger Randbereich
- 53: Zentrierzapfen
- 54: ebener Auflageflächenbereich
- 55: Schraubverbindung
- 56: Einschraubelement
- 57: Durchschrauböffnung
- 58: Befestigungsschraube
- 59: Schraubenkopf
- 60: Domausnehmung
- 61: seitlicher Wandbereich
- 62: Halteelement
- 63: Freischnitt
- 64: Elektronikmodul
- 65: Haltezapfen
- 66: Distanzhalter
- 66a: Distanzhalterwand
- 67: elektrische Leitungen
- 68: Steckanschluss
- 69: Steckverbinder
- 70: Rastverbindung
- 71: Rotor
- 72: Kohlebürste
- 73: Kohlehalter
- 74: Montagefläche
- 75: Auflagerippe
- 76: Basisplatte
- 77: Zentrierzapfen
- 78: Zentrierausnehmung
- 79: Rastverbindung
- 80: Einhakelement
- 81: Schnappelement
- 82: Einhakelement
- 83: Federelement
- 84: elektrische Leitung
- 85: Sensoreinrichtung
- 86: Rotorwelle
- 87: Magnetring
- 88: Magnetelement
- 89: Tasche
- 90: Haltearm
- 91: Stützscheibe
- 92: Schraubverbindung
- 93: Drehachse
- 94: Wälzlager
- 95: äußerer Lagering
- 96: Anzeige- und/oder Bedieneinrichtung
- 97: Ausnehmung
- 98: Sichtseite
- 99: Oberseite
- 100: Einschaltverriegelungselement
- 101: Eingabetaste
- 102: Eingabetaste
- 103: Eingabetaste
- 104: Display
- 105: Balkendiagramm
- 106: Zeitanzeige
- 107: Drehzahlanzeige
- 108: Eingabetaste
- 109: Eingabetaste
- 110: Eingabetaste
- 111: Platine
- 112: Tastenfolie
- 113: Anschlussstecker
- 114: Oberseite
- 115: Lüfterrad
- 116: Außenverzahnung
- 117: Stator
- 118: Rotor-Stator-Luftspalt
- 119: Kühlluft
- 120: Luftströmungskanal
- 121: Umlenkbereich
- 122: Luftstrom
- 123: schalldämmendes Element
- 124: Z-förmiger Strömungsteilbereich
- 125: Stirnrad
- 126: Getriebewelle
- 127: Getriebe
- 128: Abtriebsverzahnung
- 129: Stirnrad
- 130: Anschlusselement

## Patentansprüche

1. Handbetätigbare Baumischmaschine (1), insbesondere handbetätigbare Rührmaschine für das Rühren und/oder Mischen von Baustoffen,
mit einem Gehäuse (2), in dessen Gehäuseinnenraum (35) ein Antriebsmotor (5) wenigstens zum Teil aufgenommen ist, wobei der Antriebsmotor (5) wenigstens eine Antriebswelle (7) aufweist, die unmittelbar oder mittelbar mit einem Misch- und/oder Rührwerkzeug wirkverbindbar ist,
mit einer Betätigungseinrichtung (13), mittels der der Antriebsmotor betätigbar ist,
wobei der Antriebsmotor (5), vorzugsweise gesteuert über eine mit der Betätigungseinrichtung (13) gekoppelte Steuereinrichtung, geeignet und ausgebildet ist, eine Drehzahl, vorzugsweise eine Last-Drehzahl, an der das Misch- und/oder Rührwerkzeug antreibenden Antriebswelle (7) von 200 U/min bis 1000 U/min, bevorzugt von 250 U/min bis 750 U/min, höchst bevorzugt von 300 U/min bis 650 U/min, zur Verfügung zu stellen.

2. Baumischmaschine nach Anspruch 1, **dadurch gekennzeichnet, dass** diese Drehzahl durch ein Getriebe bzw. eine Getriebeuntersetzung des an der Motorausgangswelle, vorzugsweise der Rotorwelle (86), eine Motordrehzahl, vorzugsweise eine Last-Motordrehzahl, von 12000 U/min bis 21000 U/min, bevorzugt von 14000 U/min bis 19000 U/min, höchst bevorzugt von 16000 U/min bis 17000 U/min, zur Verfügung stellenden Antriebsmotors (5) bewirkt ist.

3. Baumischmaschine nach Anspruch 1 oder 2, **dadurch gekennzeichnet, dass** das Getriebe der Baumischmaschine (1) kein extern und/oder manuell von einem Bediener schaltbares Getriebe ist.

4. Baumischmaschine nach einem der vorhergehenden Ansprüche, **dadurch gekennzeichnet, dass** das Getriebe eine Getriebeuntersetzung im Bereich von 35:1 bis 15:1, vorzugsweise von 30:1 bis 20:1, aufweist.

5. Baumischmaschine nach einem der vorhergehenden Ansprüche, **dadurch gekennzeichnet, dass** der Antriebsmotor (5) durch einen Elektromotor gebildet ist, der einen Rotor (71) und einen Stator (117) aufweist.

6. Baumischmaschine nach einem der vorhergehenden Ansprüche, **dadurch gekennzeichnet, dass** das Gehäuse (2) ein- oder mehrteilig ausgebildet ist, vorzugsweise mehrteilig ausgebildet ist und ein, bezogen auf die Gebrauchsposition der Baumischmaschine (1), oberes Gehäuseteil aufweist, das einen Gehäusedeckel (3) ausbildet und, vorzugsweise lösbar, mit einem ein- oder mehrteiligen unteren Gehäuseteil (4) verbunden ist.

7. Baumischmaschine nach einem der vorhergehenden Ansprüche, **dadurch gekennzeichnet, dass** die Betätigungseinrichtung (13) mit der Steuereinrichtung gekoppelt ist, mittels der bei einer Betätigung der Betätigungseinrichtung (13) der Antriebsmotor (5) elektronisch ansteuerbar ist, wobei bevorzugt vorgesehen ist, dass die Steuereinrichtung Bestandteil eines Elektronikmoduls (64) ist, das im Gehäuseinnenraum (35), vorzugsweise im Bereich des Gehäusedeckels (3), und/oder, mit Bezug auf die Gebrauchsposition der Baumischmaschine (1), oberhalb des Antriebsmotors (5) angeordnet sowie mit dem Antriebsmotor (5) elektrisch verbunden ist.

8. Baumischmaschine nach einem der vorhergehenden Ansprüche, **dadurch gekennzeichnet, dass** das Gehäuse (2), vorzugsweise das Elektronikmodul (64) und/oder der Gehäusedeckel (3), eine Anzeige- und/oder Bedieneinrichtung (96) aufweist, mittels der ein Betriebszustand anzeigbar und/oder ein Betriebsmodus eingebbar ist, wobei bevorzugt vorgesehen ist, dass die Anzeige- und/oder Bedieneinrichtung (96) über einen Zugangsbereich des Gehäusedeckels (3) bedienbar und/oder zugänglich ist.

9. Baumischmaschine nach Anspruch 8, **dadurch gekennzeichnet, dass** der Zugangsbereich durch eine Bedienfolie oder eine Ausnehmung (97) im Gehäusedeckel (3), vorzugsweise in einer Oberseite des Gehäusedeckels (3), gebildet ist, über die die Anzeige- und/oder Bedieneinrichtung (96) bedienbar und/oder zugänglich ist.

10. Baumischmaschine nach Anspruch 8 oder 9, **dadurch gekennzeichnet, dass** die Anzeige- und/oder Bedieneinrichtung (96) im Falle einer Ausnehmung (97) im Gehäusedeckel (3) auf einer Sichtseite des Elektronikmoduls (64) angeordnet ist, die die Ausnehmung (97) im montierten Zustand verschließt und Bestandteil der Oberseite (99) des Gehäusedeckels (3) bildet.

11. Baumischmaschine nach einem der Ansprüche 8 bis 10, **dadurch gekennzeichnet, dass** die Anzeige- und/oder Bedieneinrichtung (96) wenigstens ein Interaktionselement, vorzugsweise wenigstens eine physische Eingabetaste (101, 102, 103) und/oder wenigstens eine virtuelle Eingabefläche, aufweist und/oder mit wenigstens einem externen Interaktionselement signalübertragend, vorzugsweise in Verbindung mit einer App, koppelbar ist, wobei mittels des wenigstens einen Interaktionselementes wenigstens ein Mischparameter, vorzugsweise die Mischzeit und/oder die Drehzahl, einstellbar bzw. vorgebbar ist, und/oder dass die Anzeige- und/oder Bedieneinrichtung (96) wenigstens ein Display (104) aufweist, auf dem wenigstens eine den Mischvorgang charakterisierende Information, vorzugsweise die Mischzeit und/oder die Drehzahl, anzeigbar ist.

12. Baumischmaschine nach einem der vorhergehenden Ansprüche, **dadurch gekennzeichnet, dass** die Steuereinrichtung eine Zeitzählerfunktion, vorzugsweise mit einer Pausenfunktion, umfasst, mittels der die Mischzeit bei einer Betätigung der Betätigungseinrichtung (13) auf dem Display (104) anzeigbar ist, wobei bevorzugt vorgesehen ist, dass der Zeitzähler bei einer Betätigung der Baumischmaschine (1) mittels der Betätigungseinrichtung (13) für eine vorgegebene Zeit startet und/oder dass der Zeitzähler eine Pausenfunktion aufweist, mittels der in Abhängigkeit von einer vorgegebenen Pausenzeit der Zeitzähler entweder auf Null gesetzt wird, wenn die Pausenzeit überschritten wird, oder der Zeitzähler weiterläuft, wenn die Pausenzeit nicht überschritten wird.

13. Baumischmaschine nach einem der vorhergehenden Ansprüche, **dadurch gekennzeichnet, dass** eine Handgriffeinrichtung (12) vorgesehen ist, die wenigstens einen Handgriff (15, 16) aufweist oder ausbildet und mit dem Gehäuse (2) verbunden ist,

14. Baumischmaschine nach Anspruch 13, **dadurch gekennzeichnet, dass** die Betätigungseinrichtung (13), vorzugsweise ein Handschalter, Bestandteil einer Handgriffeinrichtung (12) ist, die kabellos oder kabelgebunden mit der Steuereinrichtung, bevorzugt mit dem Elektronikmodul (64) und damit mit der Steuereinrichtung, koppelbar ist oder gekoppelt ist, wobei bevorzugt vorgesehen ist, dass die Betätigungseinrichtung (13) mit einem Einschaltverriegelungselement (100) gekoppelt ist, das die Betätigungseinrichtung (13) lösbar verriegelt und das für eine Freigabe der Betätigung der Betätigungseinrichtung (13) zusätzlich zu dieser aktivierbar, insbesondere drückbar, ist.

15. Verfahren zum Betreiben einer handbetätigbaren Baumischmaschine (1), insbesondere einer handbetätigbaren Baumischmaschine nach einem der vorhergehenden Ansprüche,
mit einem Gehäuse (2), in dessen Gehäuseinnenraum (35) ein Antriebsmotor (5) wenigstens zum Teil aufgenommen ist, wobei der Antriebsmotor (5) wenigstens eine Antriebswelle (7) aufweist, die unmittelbar oder mittelbar mit einem Misch- und/oder Rührwerkzeug wirkverbindbar ist,
mit einer Betätigungseinrichtung (13), mittels der der Antriebsmotor betätigbar ist,
wobei der Antriebsmotor (5), vorzugsweise gesteuert über eine mit der Betätigungseinrichtung (13) gekoppelte Steuereinrichtung, geeignet und ausgebildet ist, eine Drehzahl, vorzugsweise eine Last-Drehzahl, an der das Misch- und/oder Rührwerkzeug antreibenden Antriebswelle (7) von 200 U/min bis 1000 U/min, bevorzugt von 250 U/min bis 750 U/min, höchst bevorzugt von 300 U/min bis 650 U/min, zur Verfügung zu stellen.
